# EUROPEAN PATENT APPLICATION

(11) **EP 3 872 734 A1**
(43) Date of publication of application: **01.09.2021**
(21) Application number: 19876161.1
(22) Date of filing: 22.10.2019
(51) Int. Cl.: G06Q 20/40, G06F 21/31, G06F 21/62

(54) **BLOCKCHAIN SYSTEM, AND DATA TRANSACTION SYSTEM IN WHICH BLOCKCHAIN SYSTEM IS USED**

(30) Priority: 22.10.2018 JP 2018198539; 22.10.2018 JP 2018198685; 17.06.2019 JP 2019112407; 03.07.2019 JP 2019124820
(71) Applicant: Matsunaga, Chikara, Hyogo 6580032 (JP)
(72) Inventor: Matsunaga, Chikara, Hyogo 6580032 (JP)
(74) Representative: Horn Kleimann Waitzhofer Patentanwälte PartG mbB
(86) International application number: PCT/JP2019/041422
(87) International publication number: WO 2020/085346

(57) **Abstract**

To execute process for determining and confirming the validity of edit data in each block of a blockchain easily and with high security, and also to execute authority verification with which it is possible to verity the authority of editing edit data and confirm the content of editing. A blockchain system comprising a plurality of computer systems, data processing applications, and a blockchain generation part for generating a blockchain in common, each block or data having open and close secret code set therefor, and each of the data processing applications being provided with an open function for opening data in a block in response to the input of an open secret code, a data editing function for editing data, and a close function for terminating and closing edited data in response to input of close secret code. The edit data and the hash value data in a block are exchanged between blockchains. Blockchain is generated in advance by the blockchain generation part.

## Description

### TECHNICAL FIELD

The present invention relates to a data management system for managing data information on various activities of an individual and an enterprise, and a service providing system for providing a service using the data management system.

In particular, the present invention relates to a blockchain system in which a data processing stage set in a data processing flow is blocked as the data processing flow is represented by a chain of a block by utilizing a plurality of computer systems connected to each other in a network in a data transaction manner.

### BACKGROUND ART

With the development of network technology, a number of computer systems are connected to a network, various applications are operated by using the computer systems, various data are generated in accordance with the task and data are edited and processed.

In recent years, in a conventional system configurated by a client server system, a blockchain system adopts a blockchain technique having high security for preventing falsification and relatively easily configurates suitable system with a downloaded application.

A representative blockchain system is known as a blockchain system for a bit coin. It is a mechanism in which determination processing of validity of the transaction data and determination processing for calculating a specific hash value called a proof-of-work are performed by a node called as a minor of transaction data generated on the P2P network, and the plurality of established transactions are grouped into one block, and the blocks are connected in a chain-like form to be described in a distributed ledger called a blockchain.

In recent years, there has been developed a variety of variations, such as a consortium-type blockchain technique in which only specific nodes participate in distributed ledger data processing and transaction approval processing, because the load of a determination process for calculating a specific hash value so-called a proof-of-work is enormous and cost-consuming.

As known techniques in the art, Japanese Patent Application JP 2017-91149 is disclosed. It discloses the blockchain generation device connects a new block to a blockchain data in which blocks including transaction data generated by a plurality of transaction generation devices are connected to generate new blockchain data. The blockchain generation device includes: a synchronization means for acquiring shared data including a blockchain data and a transaction data that is not included in the blockchain; a transaction pattern amount calculation means for calculating a transaction pattern amount of a block generator from transaction data related to the identifier of the block generator using the blockchain generation device; a block generation condition confirmation means for determining whether or not a block generator has a qualification for generating new blockchain data on the basis of the transaction pattern amount calculated by the transaction pattern amount calculation means; and a determination means for referring to the shared data when it is determined that the block generation condition confirmation means confirms a qualification; a blockchain generating means for generating a new blockchain.

The blockchain technique is excellent in the art, and once the validity determination processing and the proof-of-work determination process are executed and recorded in a distributed ledger called a blockchain, there is a merit that data can be shared among the systems sharing a distributed ledger called a blockchain on a network and falsification is extremely difficult in the blockchain system.

However, one improvement in the blockchain technology is that the load for determination processing of the validity of the transaction data and the determination processing called the proof-of-work is enormous, and the calculation cost, the time cost and the cost are required heavy.

In the conventional blockchain technology, the determination processing of the validity of the transaction data in the block and the determination processing of the proof-of-work are performed, while security is secured by a mechanism capable of winning the right to connect it as a new block at the front of the previously formed block. If a person in charge of validating a new block connected to the previous block of a block formed in the past is determined in such a manner that security is secured, other alternative means can be applicable.

In the prior art, it is confirmed whether or not a current block generator is an authorized generator, for example, an authentication processing by various security measures such as ID code, password, input of biological information, etc. is required when an application is started, and an application file is opened. In the prior art, if it is authenticated that the current generator of the application is a authorized generator at the start of use, the authentication is not performed after that, and security measures such as input of a particular password are not taken when closing the application file.

The authentication process in the prior art will be briefly described. When an application is started and an application file is opened, a countermeasure for inputting various code information is widely adopted as the input of a password. According to the security level, a password is simply inputted from the keyboard or the ID information is inputted from the IC card carried with the password, and biological information such as a password, a fingerprint, a vein pattern, or the like is inputted. In addition, the user can not only be operated by one person but also the password, ID information, etc. of the plurality of authorized persons can be aligned to open the user application file. In this way, a high security is set in order to make an operation possible state by opening the application file.

When the application starts and the application file is in an operable state, the user can edit the application file by using the application, but when a special function is used during the operation of the application, a password, ID information, or the like may be separately determined separately.

In this way, when an application file is opened or a special function is used, security may be set. On the contrary, when the application of the application is finished and the application file is closed or when the use of the special function is finished, no special password or input of ID information or the like is not required but the security setting is not performed. Most of them can be simply finished by input of a command "end" or "closing" and button depression.

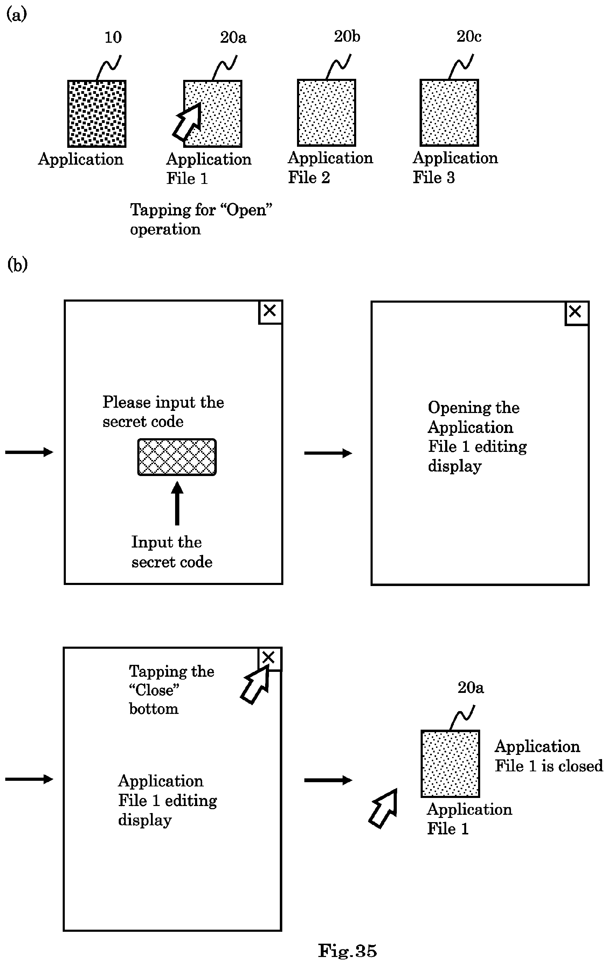

FIG. 35 is a drawing showing the operation of the general application program for starting and opening the application file, using, and then closing. It is an example showing the typical operation for opening and closing the application file.

As shown in Fig. 35 (A), application program 10 is installed to the computer system. When the user starts to use the application program 10, the user selects the icon of the application program 10 displayed on the monitor by the pointing device such as mouse. With the user input application file open command by the double click operation, the application program 10 is started.

In this case, several application files such as 20a, 20b, 20c that can be operated by the application program 10 are installed on the computer system, and the corresponding icons are displayed on the monitor. The user selects the icon of the application file 20 by the pointing device such as a mouse and conducts the double click operation, and the selected application file 20 is opened by the application program 10. The application file 20 is opened by the application program 10 to be operable, and current data contents are displayed onto the monitor.

If the application file 20 has a security measure for requesting password input, a password input column pops-up for confirming the use authority as shown in the upper figure of Fig. 35 (B). As shown above, password input may be requested if the user starts application program 10 and opens application file 20 for operating in the prior art. If higher security is combined, the input of the identification information from an IC card and the input of the biological information are requested besides the password input.

As shown in the upper figure of Fig. 35 (B), if the user inputs requested password and code information for opening the application file 20 via keyboard or other input devices, and the authentication process is identified successfully to fulfill the requested security level, the application file 20 is opened normally.

Next, as shown in the lower figure of Fig. 35 (B), when the user finishes the desired operation through the application file 20, the user can simply close the application file 20 by pushing the command button or the pull-down menu such as "End" button and "Close" button with the pointing device such as a mouse. The application program 10 and the application file 20 are simply finished and closed normally.

The conventional application program 10 does not request any input for special password and ID information when closing the application file 20. The conventional application program 10 finishes simply and closes the application file 20 simply.

As shown above, when accessing the application file 20, various information input is requested according to the employed security level for confirming the authentication of the user at the opening of the application file 20. However, once the authentication check is conducted at the opening event, it is assumed that the right person who satisfied authentication keeps on using under his authentication, and the finishing operation and closing operation of the application file 20 is conducted under his authentication. Therefore, the conventional application program 10 does not request any special input of the password and ID information at the closing operation of the application file 20.

Patent Document 1: JP 2017-91149A
Patent Document 2: JP 2016-277193A

### DISCLOSURE OF THE INVENTION

### PROBLEMS TO BE SOLVED

For example, a user who participates in a blockchain system has many specified users or many unspecified users who participate in the blockchain system assuming a process management system for managing a process flow and a work flow for facilities, services, movable property, real estate, immovable property, or the right to use their usage areas in which a flow of a work flow is connected.

One of the advantages of a blockchain system is that anyone can freely participate without specifying a participant who participates, but it must be managed so as to make the user appropriately use in a predetermined range in the case of a large number of specified or unspecified number of users. Even on the premise that an authorized person is provided and managed, it is necessary to confirm whether or not the authorized person is a true person or not (even if it is an anonymous operation), and security management is also important.

Therefore, in the present invention, the blockchain technology is improved, the validity determination process and the confirmation process of the transaction data in the block are executed easily and with high security, and the authority to confirm the edit data and the authority to approve the edited contents can be performed. The purpose is to provide a blockchain system and a data transaction system using the blockchain system, in which a security setting is applied to effectively reduce erroneous processing and fraudulent processing that is different from the fact.

### MEANS FOR SOLVING THE PROBLEMS

In order to achieve the above object, a blockchain system according to the present invention is provided with: a plurality of computer systems connected to each other so as to be capable of transmitting and receiving data in a network; a data processing application provided in each of the computer systems; and a blockchain generation part for generating a blockchain on a common area of a blockchain data area on each computer system or a blockchain data area on a cloud in advance, wherein the data processing stage is blocked and the blockchain representing the flow of the data processing by the chain of the blocks is systematically or dynamically divided into the blockchain data area on each computer system or on the cloud; a data processing part in which a commonly configurated blockchain generation part and each of the data processing applications execute predetermined data processing in each block in a scheduled or dynamically manner along the flow of the blockchain. Wherein each of the blocks, the data itself, the blockchain data area, the data processing application, or a memory storage area referred to by the data processing application have an open secret code for accessing the corresponding data in the blockchain and a closed secret code for closing the data processing application normally. Wherein the blockchain system includes: an opening function for opening the corresponding block, the data file in the block, the blockchain data area, or the data processing application when receiving the input of the open secret code; a data editing function for editing the data; and a closing function for closing the corresponding block, the data file in the block, the blockchain data area, or the data processing application when receiving an input of the close secret code.

With the above configuration, it is confirmed by an open secret code whether or not it is a computer system used by an authorized person capable of operating an opening function and accessing the editing data of each block or not, and it is confirmed by an open secret code whether or not it is a computer system used by an authorized person to charge a prescribed process through a data processing application by operating a data editing function with respect to the data in the block. In addition, it is possible to confirm whether or not the computer system used by an authorized person in which the validity of the editing data in the block is approved can be confirmed by a close secret code. Thus, it is possible to surely and easily perform confirmation processing of validity which is a large load in a conventional blockchain system.

In addition, in the above configuration, the data exchanged between the blockchains include the edit data and hash value, wherein the data editing function includes: a data processing function for executing the data processing of the data processing stage of a current stage in which the editing data taken over from the preceding block, and calculating the hash value woven in the abut stage by a predetermined hash function on the basis of the hash value data taken over from the preceding block in the preceding stage and the edition data obtained by the preceding block. It is preferable that the edited data and the hash value obtained in the current block are notified to other data processing applications participating in the blockchain and provided with a data storage function to be stored in the corresponding block.

With this configuration, even in both the "pre-scheduled type blockchain system" and "dynamic generation blockchain system" of the present invention, alteration of data can be effectively prevented. In a conventional blockchain technique such as a bit coin, it is necessary to find a special hash value called a nonce so that a special hash value (for example, a hash value following zero from the head) is required, but in the present invention, it is possible to obtain the capability of preventing falsification taking over the characteristic of the simple hash value. Since it is not necessary to make such a special hash value as described above, the calculation cost, the time cost and the cost can be remarkably suppressed.

The "pre-scheduled blockchain system" according to the present invention is characterized in that there is the authority computer system for managing the blockchain system is predetermined among a plurality of computer systems; the authority computer system comprises the blockchain generation part; the blockchain has created in the flow of the data processing provided via the blockchain generation part; and the content of data processing to be executed in the data processing step of each of the blocks has been given. The blockchain system is notified to each of the computer systems participating in the blockchain system, and the blockchain has been pre-configured in common.

The authority computer system is provided with a secret code setting function for setting each of the open secret code and the close secret code to each block or each data file in each block.

With the above configuration, In the "pre-scheduled blockchain system" of the present invention, the authority, the flow of a business, a service or a story to be blocked is pre-scheduled for each block. A data editing content by a data processing application through a data editing function to be executed in the blocks is scheduled, and if a control sequence is determined, a calculation cost, a time cost, and a cost, which are demerits when connecting a new block in a conventional blockchain technique, can be suppressed while keeping the merit of a blockchain technique of preventing alteration or data sharing.

The "dynamic generation type blockchain system" is characterized in that each of the computer systems comprises the blockchain generation part, and the blockchain generation part can determine the next block of the blockchain in charge of the block and the content of the data processing to be executed in the data processing step of the next block and creates a continuation of the blockchain representing the flow of the data processing.

The computer system is provided with a secret code setting function for setting the open secret code and the close secret code to the next block or data in the next block of the next stage.

With the above configuration, in the "dynamic generation type blockchain system" of the present invention, the data processing can be continued in the style that the current person takes over his/her task to the designating person who will be in charge in the next block, assuming a blockchain in which a business content has already been subjected to a routine in cooperation with an external other company or an external organization, and each successor participant person can perform his/her role in the whole processing, and current person who can clearly determine the taking-over successor participant person, the person who should take over the next block is dynamically determined by each person.

For example, even while a game situation is changed like a rugby game, each player in trust can proceed to play game for the same purpose. Since it is recognized whether any error or insufficient processing is generated in any block because the alteration from the back date cannot be performed, the merit of specifying the trouble occurring in the processing flow can be secured, and the calculation cost, the time cost and the cost which are the demerit of the conventional blockchain technology can be suppressed.

The open secret code and the close secret code given to each computer system participating in the blockchain system of the present invention will now be described in detail.

The open secret code can be two kinds of secret codes. The one is the open secret code for allowing only viewing of the data in the block of the blockchain without activating the data editing function of the data processing application, and the other is the open secret code for activating the data editing function of the data processing application and editing the data in the block of the blockchain. The close secret code can be two kinds of secret codes. The one is the close secret code for closing the opened state block of the blockchain by normally ending each block or the data in each block. The other is a close secret code which reflects editing by the data editing function of the data processing application and closes each block or the data in each block normally.

Here, the open secret code and the close secret code for allowing viewing are commonly applied to all or a plurality of blocks or the data in the block, all of the computer systems are notified, and the open secret code and the close secret code for allowing editing are individually given to the computer system in charge of the block or the data in the block.

In the case of the above configuration, since all the computer systems participating in the blockchain system of the present invention hold the open secret code for allowing viewing, so the edited data in each block can be viewed and the progress status can be confirmed. However, in each block, the data editing function of the data processing application can be started to edit the data in the block, and the computer system in charge can be limited only to those having the open code for allowing editing.

In addition, as the close secret code, three kinds of close secret codes assigned to the authority computer system can be used. There is a close secret code for allowing approving the data edition, in addition to the close secret code for allowing viewing and the close secret code for allowing editing. In this case, the respective computer systems participating in the blockchain system of the present invention can confirm the progress status by viewing the edited data in each block when all the computer systems participating in the blockchain system hold the open secret code for allowing viewing. The computer system capable of editing the data in each block can be limited only to those having the open secret code for allowing editing, and the editing contents of the edited data in each block can be approved only by the authorized person system holding the close secret code for allowing approving, and the authorized person can proceed while ensuring the progress status.

Each of the open secret codes and each of the close secret codes set by the secret code setting function can be a disposable secret code which can be used only once. If persons participating in a group is collected by each project, it may be sufficient for a disposable secret code as the open secret codes and the close secret codes.

In addition, each of the open secret codes and each of the close secret codes set by the secret code setting function can be biometric information code information based on biological information of a person responsible for the operation of each of the blocks. If the biological information is employed, the personal authentication can be performed at a higher level, and it is highly effective in preventing the fraud person from being pretending as a correct person.

Next, the blockchain system of the present invention has various patterns for the connection of each block in a blockchain.

First pattern of a blockchain system of the present invention is obtained by forming a chain in which each of the blocks is arranged in one dimension. This is a pattern similar to that in which a conventional blockchain is generally primarily developed in one dimension and one direction.

Next, Second pattern of the blockchain system of the present invention, the blockchain has a chain in which each of the block is arranged in one dimension as a primary blockchain, and a secondary blockchain or higher-order blockchains of one or more blocks branched from one or a plurality of blocks included in the primary blockchain are constructed, and the blockchain is composed in two-dimensional or higher-dimension. The conventional blockchain can be also branched. However, it is generated temporally if immediately determining the superiority of the nonce hash value is not judged in the nonce hash value mining progress. Therefore, it is in just temporally state. Generally, the base is developed in one dimension and in one direction. However, the blockchain of the present invention, in particular, the "pre-scheduled blockchain system", a plurality of processes which can be developed and processed in parallel. For example, the process management flow are often possible, the process (1) and the process (2) are carried out simultaneously in parallel. It is advantageous to make the schedule forward rather than advancing the process (1) and the process (1) in a serial manner. In addition, there are the sub-process (1-1), the sub-step (1-2), and the sub-steps (1-3) different from each other in one main step 1 (for example, a component processing step). When the process (1) is finished at the end of the sub-processes (1-3) and the next process (for example, the component coating process) is taken over, the connection of the matrix-like blocks is often easy to grasp the flow of the process. In the blockchain of the present invention, even if the blockchain is two-dimensionally or higher dimensionally formed, a person in charge of each block of the secondary blockchain or the two or higher dimensions can be specified and advanced, so that the blockchain can flexibly cope with such a high-dimensional matrix.

Each of the data processing applications is provided with a sequence control function for controlling the transition sequence of the block of the primary blockchain and the transition sequence of the block of the secondary blockchain or higher dimensional blockchain, and in addition to the input of the open secret code set in the open function as a condition for starting the data editing function of the block, it is preferable that the processing of the block in the primary blockchain and the blockchain of the secondary blockchain or more is completed in the primary blockchain in which the processing is required to be completed prior to the start of the data processing related to the following block of the stage described in the sequence control function.

When the order of the sequence exists in the progress of the primary blockchain or the branched secondary blockchain, the sequence of the sequence control is correctly executed, and the collision of the progress of the entire blockchain can be prevented.

Next, a system configuration example to which the blockchain system of the present invention is applied is shown.

For example, there is a blockchain system for procedure management.

That is, the data managed and processed in the blockchain is related to procedure management data for managing a procedure flow in which each procedure is connected, and the computer system is a computer system in which an entity or organization involved in each procedure is used, and each block corresponds to each stage of each procedure.

For example, there is a blockchain system for process management.

That is, the data managed and processed in the blockchain is related to process management data for managing a process flow in which each process is connected, and the computer system is a computer system in which an entity or organization involved in each process is used, and each block corresponds to each stage of each process.

Specific examples of the blockchain system for process management include a blockchain system for managing design process, a blockchain system for managing producing process, a blockchain system for managing processing process, a blockchain system for managing composing process, a blockchain system for managing test process, a blockchain system for managing inventory quality, or a combination thereof.

In addition, A concrete example of a blockchain system for process management is provided, the blockchain system for managing business flow, a blockchain system for managing the flow of products, a blockchain system for managing the flow of a service, a blockchain system for managing the flow of a software development, a blockchain system for managing the flow of contents development, a blockchain system for managing the food processing flow, a blockchain system for managing the itinerary schedule flow, or a combination thereof can be provided.

Then, for example, there is a blockchain system for work flow management.

That is, the data managed and processed in the blockchain is related to work management data for managing a work flow in which each work is connected, and the computer system is a computer system in which an entity or organization involved in each process is used, and each block corresponds to each stage of each work.

For example, the blockchain system for work management may be a blockchain system for agricultural work flow management, a blockchain system for fishery work flow management, a blockchain system for forest work flow management, a blockchain system for management of dairy work flow, or a combination thereof.

Then, for example, there is a blockchain system for project progress management.

That is, the data managed and processed in the blockchain is related to project progress management data for managing a project progress flow in which the progress of the project is connected, and the computer system is a computer system in which an entity or organization involved in each project process is used, and each block corresponds to each stage of each project process work.

Then, for example, there is a blockchain system for buying and selling progress management.

That is, the data managed by the blockchain is related to the sales progress management data for managing the buying and selling progress flow in which the flow of the progress of the buying and selling is connected, and the computer system is a computer system utilizing the entity or the organization participating in the flow of the buying and selling progress, and the block is a blockchain system for dealing progress management corresponding to each stage of the flow of the buying and selling progress.

Next, for example, there is a blockchain system for a predetermined promise contract progress management.

In other words, the data managed by the blockchain are managed by the blockchain, wherein the computer system is a computer system utilizing an entity or organization participating in the flow of the predetermined promise contract progress, and the block is a blockchain system for managing progress management corresponding to each stage of the flow of the predetermined promise contract progress.

Then, for example, there is a blockchain system for usage right management.

In other words, the data managed by the blockchain are managed by the blockchain, the present invention relates to usage right management data for managing usage rights in which progress flows related to the application or share of a facility, a service, a computer system, a movable property, a real estate, an immovable property, or an usage partition thereof, wherein the computer system is a computer system that uses an entity or organization involved in the flow of each usage right, and the block is a blockchain system for usage right management corresponding to each stage of the flow of the usage right.

In the various blockchain systems described above, it is preferable that the data processing application is provided with an usage object charging processing function for performing charging processing, and the determination and settlement of the charging content are executed in conjunction with the progress of the processing of each block of the blockchain. In a variety of actual blockchain systems, it is often necessary to perform money processing, and it is more convenient to use the money processing in combination.

The blockchain system can also be applied as a blockchain system for recording and holding personal information.

The blockchain generation part and the secret code setting function are provided, through the blockchain generation part, the next block of the next stage in charge of the user is dynamically generated or automatically prepared, and the open secret code and the close secret code related to the next stage are set or automatically set by itself to the block of the next stage through the secret code setting function. A blockchain in which the blocks involved by himself / herself are continued is created.

In addition, the content of data processing to be executed in the data processing stage of each block is a record of personal information associated with the user, and the blockchain is formed as a personal information blockchain in which the personal information of the user is accumulated.

In other words, in the"dynamic generation type blockchain system", a block of the next stage is constructed by himself/ herself, and at that time, a block having an open secret code and a close secret code is dynamically created. A block is connected to each other in such a way that the self-designation is repeated so as to record the personal information generated by being linked to himself or herself in the latest block in the block of the stage. A "personal information blockchain" storing his/ her personal information can be accumulated by continuing in the stored form.

When the open secret code and the close secret code are biological information code based on user's own biological information, data can be held with higher security which cannot be viewed or edited by others. Data to the information bank can be provided in its own determination.

Next, the present invention provides a data transaction system in which applying and operating of the blockchain system described above are not limited. The data re-use transaction system can be provided by positively utilizing the data obtained in the operation of the blockchain system as described above.

That is, at least one distributed log data server is included in the distributed log data server group, the data server group is provided with a client which is exchanged between the blockchains along the flow of the data processing, collects and stores the edited data in the data server group, such as procedure data, process management data, specification data of members related to the data, production facility operation data, quality test data. The traceability data of the member and the finished product, business flow management data, article distribution process management data, service providing process management data, software data, content data, food processing recipe data, travel management data, work management data, farm work process management data, usage right management data, insurance claim data, medical treatment data, medical history data, clinical trial data, charging data and personal information data. A part, all or a combination thereof can be provided for any or a combination of these data can be effectively utilized. The data transaction system effectively utilizing the data can be configured, and the common use and utilization of data across between the companies and the organization can be provided.

### EFFECTS OF THE INVENTION

According to the blockchain system of the present invention, the open function for accessing the editing data of each block, a data editing function for the data in the block can be confirmed by the open secret code, confirmation processing of the validity of the editing data in the block can be confirmed by the close secret code, and the validity confirmation processing which is a large load in the conventional blockchain system can be surely and easily performed.

Even in the "pre-schedule type blockchain system" or the "dynamic generation type blockchain system" of the present invention, it is possible to suppress a calculation cost, a time cost, and a cost, which are demerits when connecting a new block in a conventional blockchain technology, while having the merit of a blockchain technique of preventing data alternation.

According to the data transaction system utilizing the blockchain system of the present invention, the data obtained by the blockchain system of the present invention can be effectively utilized, and the common use and utilization of data across between companies and between organizations can be provided.

### BRIEF DESCRIPTION OF THE DRAWINGS

Fig. 1 is a schematic view of the configuration of the pre-schedule type blockchain system 1 according to Embodiment 1.
Fig. 2 is a schematic view showing a flow of the generation of the pre-scheduled type blockchain by the blockchain generation part 110.
Fig. 3 is a schematic view showing variations in storage locations or areas of various secret code in each computer system.
Fig. 4 is a schematic view showing a first variation of the takeover method.
Fig. 5 is a schematic view showing the concept of the exchange of data between each block in the first takeover method.
Fig. 6 is a schematic view showing a second variation of the takeover method.
Fig. 7 is a schematic view showing the concept of the exchange of data between each block in the second takeover method.
Fig. 8 is a schematic view showing a third variation of the takeover method.
Fig. 9 is a schematic view showing the concept of the exchange of data between each block in the third takeover method.
Fig. 10 is a schematic view showing the encryption processing/ decryption processing over a network.
Fig. 11 is a schematic view showing variations in connection of various blockchains.
Fig. 12 is schematic view showing a pattern in which main blockchain is one-dimensional link, a feed-forward type branch is provided as two-dimensional link.
Fig. 13 is a schematic view of the basic configuration example of the first type of dynamic generation type blockchain system 1-2 according to Embodiment 2.
Fig. 14 is a schematic view of the concept of the first type of dynamic generation type blockchain system 1-2 according to Embodiment 2.
Fig. 15 is a schematic view showing an example of a case where the computer system in charge is not nominate.
Fig. 16 is a schematic view showing an example applying to a procedure management system for managing a procedure flow.
Fig. 17 is a schematic view showing an example applying to a process management system for managing a process flow.
Fig. 18 is a schematic view showing an example applying to a business flow management system for managing a business flow.
Fig. 19 is a schematic view showing an example applying to a work flow management system for managing a work flow.
Fig. 20 is a schematic view showing an example applying to a project progress flow management system for managing a project progress flow.
Fig. 21 is a schematic view showing an example applying to a buying-selling flow management system for managing a buying-selling flow.
Fig. 22 is a schematic view showing an example applying to a determination flow management system for managing a determination flow.
Fig. 23 is a schematic view showing an example applying to a usage right management system for managing a usage right.
Fig. 24 is a schematic view showing an example of application as a blockchain system relating to insurance claim processing of the visit based medical massage.
Fig. 25 is a schematic view showing an example of application as a blockchain system for medical treatment.
Fig. 26 is a schematic view for easily showing a self-designated mechanism in which block is connected to the same subject or the same object in a continuous manner.
Fig. 27 is a simple illustration of a blockchain generated by the mechanism shown in FIG. 26.
FIG. 28 is a drawing showing an example of application to a traveling recording blockchain system installing a vehicle using a smart on-vehicle device.
FIG. 29 is a drawing showing an example of the traveling recording blockchain of the traveling vehicle A in a simple manner.
FIG. 30 is a drawing showing an example of an application of an inventory management blockchain linked with a smart logistics system.
FIG. 31 is a drawing showing an example of the inventory management blockchain of the usage section A in a simple manner.
FIG. 32 is a drawing showing an example of an application of an information recording blockchain for recording information generated by various activities of a user and utilization of a usage object.
FIG. 33 is a drawing showing an example of the information recording blockchain of the user A in a simple manner.
FIG. 34 is a drawing for easily showing the configuration of the data transaction system 2 of the present invention.
FIG. 35 is a drawing showing the operation of the general application program for starting and opening the application file, using, and then closing.

### Detailed description of the preferred embodiment

The best mode for carrying out the present invention will be described in detail below. The present invention is not limited to these examples.

Embodiment 1 is a basic configuration example of a blockchain system of the present invention. In particular, the basic configuration example of a "pre-scheduled blockchain system" is shown.

Example 2 is another basic configuration example of a blockchain system of the present invention. In particular, a basic configuration example of a "dynamic generation type blockchain system" is shown.

Example 3 shows an application example of a blockchain system of the present invention for various data processing. Although some embodiments are described in this Example 3, there may be a variety of application configurations without being limited to this specific embodiment.

Example 4 shows an example of constructing a "self-designated blockchain system" for self-designating a next stage block in the configuration of Embodiment 2. Construction of an information recording blockchain is described.

Embodiment 5 shows an example of a data transaction system 2 using editing data collected by a blockchain system 1 of the present invention.

### Embodiment 1

A blockchain system of the present invention is described in Embodiment 1.

A blockchain system according to Embodiment 1 of the present invention employs "pre-scheduled blockchain system"

First, a basic configuration of a "pre-scheduled blockchain system" is described.

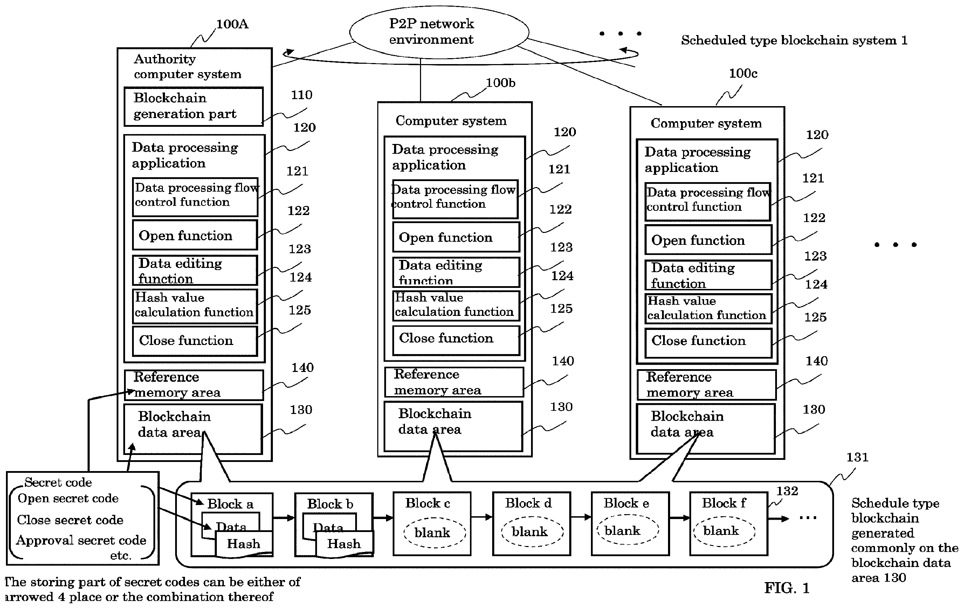

FIG. 1 is a drawing showing a basic configuration example of a pre-scheduled blockchain system 1 according to Embodiment 1. In a pre-scheduled type blockchain system, an authority computer system comprises and provided with a blockchain generation part. A data processing stage set in a data processing flow is blocked, a chain is created, a chain is connected, and a computer system in charge of processing of each block is used as common in a block data area of each computer system. Data processing is executed between computer systems participating in the blockchain.

As shown in FIG. 1, a blockchain system 1 according to the present invention is provided with a plurality of computer systems (100A, 100b, 100c). A data communication is possible in a network environment. For example, a peer-to-peer network environment can be used.

In the example of FIG. 1, among the plurality of computer systems, a computer system 100A is an authority computer system.

The computer system 100A is provided with a blockchain generation part 110, a data processing application 120, a data processing flow control function 121, an open function 122, a data editing function 123, a hash value calculation function 124, a close function 125, a blockchain data region 130, and other memory regions.

In the figure, the blockchain may be numbered as 131. In addition, the block may be numbered as 132. However, such number may be used or may not be used in the description.

A blockchain generation part 110 generates block for a data processing stage set in a data processing flow and generates a pre-scheduled type of blockchain 131 in which the flow of the data processing is expressed by a chain of a block 132 in common in a blockchain data area 130 of each computer system.

The generation of the pre-scheduled blockchain is at least three elements.

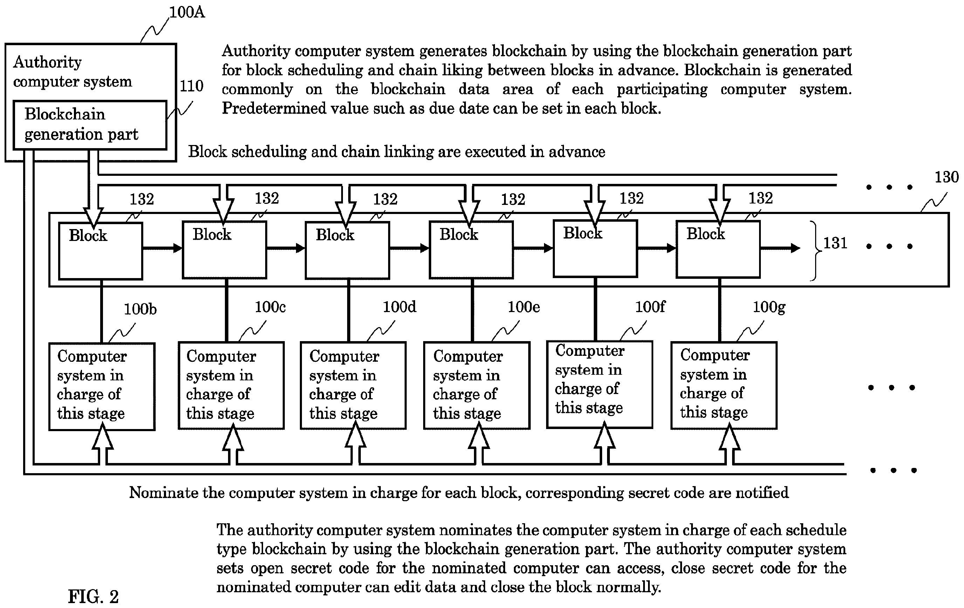

FIG. 2 is a drawing showing how the blockchain generation part 110 constructs a pre-scheduled type of blockchain.

The first function of the blockchain generation part 110 is a pre-scheduled setting function of the blockchain 131.

As shown in FIG. 2, the authority computer system 100A previously constructs a flow of a desired data processing by using a blockchain generation part 110, sets the flow of each data as a flow of block 132, and plans and sets a blockchain 131 in which the blocks 132 are made into a chain. In the blockchain system of the prior art such as a bit coin, a specific rule or condition in which the block continues is clearly determined, and there is a constraint that the rule or condition follows the rule, but the transaction content in the block and the chain expansion of the block are not determined in advance. However, in the pre-scheduled type of blockchain system 1 of the present invention, each block of a blockchain 131 and its connection are previously set by using a blockchain generation part 110 in advance by an authority computer system 100A. In the initial stage, the data itself in each block may be a blank state.

As a function of setting a blockchain as a first function of a blockchain generation part 110, for example, setting of the flow of a blockchain, setting of connection between blocks, setting of data content to be taken over between blocks, setting of the presence or absence of encryption processing of data when the blockchain is taken over between blocks, setting of a part for performing encryption processing, and the like can be provided. A blockchain generation part 110 determines and sets the contents of data processing to be performed in each block 132 and connects the flow of each block 132 to form a chain.

A second function of the blockchain generation part 110 is a nominate function of a computer system 100 in charge of each block. A blockchain generation part 110 is assigned one or more blocks 132 that are responsible for each of the computer systems 100 that participate in. In the blockchain system of the prior art such as a bit coin, anyone can participate in the conventional blockchain system, and the person who is in charge of the block is not determined in advance although it is a mechanism in which a prize or the like is given to a person who has succeeded in the departure of the nonce by the work of mining. On the other hand, the pre-scheduled type of blockchain system 1 of the present invention predetermines a computer system 100 that is a person in charge of each block 132 in advance by an authority computer system 100A.

The nominate of the computer system 100 which is a second function of the blockchain generation part 110 can be performed, for example, via a setting function of a secret code which is a third function of the following third function. That is, the person is designated as a person in charge by linking an open secret code and a close secret code set to the block or an operator of a computer system 100.

A third function of the blockchain generation part 110 is a setting of various secret codes for accessing and editing the data of each block 132 of the blockchain 131.

In this configuration, the blockchain generation part 110 is provided with a secret code setting function for setting each open secret code and the close secret code for data in each of the scheduled blocks 132 or each block 132. By notifying a specific person of a computer participating in the open secret code and the close secret code, only the person who participates in the blockchain 131 is limited only to the person who has notified the open secret code and the close secret code set to the block 132.

A fourth function of the blockchain generation part 110 is that the modification of the connection of each block 132 of the blockchain 131 such as addition, correction, and deletion, and the blockchain 131 can be changed.

In this configuration, the blockchain generation part 110 has a function of changing the blockchain 131 with respect to the connection of each scheduled block 132. In a conventional blockchain system, it is generally not assumed to change and modifying the connection of a block of a blockchain. However, in the present invention, the authority computer system determines the connection of a block 132 in a blockchain 131 in advance, and in particular, it is easy to dynamically change and modifying an unprocessed block 132. When data editing is performed again for the already processed block 132, it is necessary to redo the processing of the block again by the person who has entered the already processed block 132, but the blockchain 131 can be changed.

Each of the open secret code and the close secret code set by the secret code setting function of the blockchain generation part 110 can be a disposable secret code usable only once, and code information unique to a person in charge of each block 132 can be used.

For example, a PIN code such as a numeral or a character or a text code can be employed. For example, a bar code or a two-dimensional dot code printed on a medium carried by a user can be employed. For example, ID code information stored in the IC card carried by the user can be employed. Also, for example, biological information of a person in charge can be employed. The biological information may include a face image pattern, a fingerprint pattern, a vein pattern, an iris pattern, a voiceprint pattern, and the like. In the case of the biological information, both the open secret code and the close secret code can be the same biological information, and the open secret code and the close secret code may be different biological information.

In each computer system, a code input means (not shown) needs to be provided. Various input devices such as a bar code reader, a two-dimensional dot code reader, a camera, an IC card reader, and a biological information reading device can be used in addition to a general input device such as a keyboard and a touch panel in accordance with an open secret code and a close secret code. According to the operation of the system, an input device to be equipped may be attached. When the biological information is employed, the code input means is provided with a biological information pattern conversion means, extracts a feature amount from data such as a face image pattern, a fingerprint pattern, a vein pattern, an iris pattern, and a voiceprint pattern, performs a predetermined calculation expression or conversion processing of the feature quantity, and converts it into code information. The biological information pattern inputted by the authentic user may be converted into a correct open secret code and a correct close secret code.

Next, the variation of the secret code will be described.

The "open secret code" is code information for accessing data in the blockchain. In this embodiment, there are two kinds of variations of "viewing open secret code" and "edit open secret code" as an open secret code.

The "viewing open secret code" is a secret code capable of only viewing data in the block 132 without starting the data editing function 123 of the data processing application 120. By notifying the plurality of participants of the viewing open secret code, the person who owns the viewing open secret code can confirm the progress state of editing of the block 132 in charge of others. For example, by notifying all participants, a person who participates in the blockchain system 1 can grasp the status of the flow of the data processing by all persons.

The "edit open secret code" is a code for starting the data editing function 123 of the data processing application 120 and editing the data of the block 132. The editing open secret code is individually given to the person in charge of the block 132 of the stage, and only the person in charge is notified, so that the data editor of the block 132 of the stage is limited to the person in charge. By limiting the editing open secret code to a specific person in charge and notifying the hash value of the editing data to all of the computer systems that participate in the blockchain system 1 of the present invention, the blockchain system 1 ensures security of data editing and prevention of data alteration.

The "close secret code" is code information for normally ending and closing the data in the block 132. In this embodiment, plural kinds of variations of "viewing close secret code" and "edit close secret code" and "approval close secret code" can be used as the close secret code.

The "viewing close secret code" is code information for normally ending and closing data in each block 132 or each block 132 opened by the "viewing open secret code". The person who is notified of the "viewing open secret code" is preferably notified of the "viewing close secret code".

The "edit close secret code" is code information which accepts editing by a data editing function 123 of a data processing application 120 and normally terminates and closes data in each block 132 or each block 132. The person who is notified of the "edit open secret code" is preferably notified of the "edit close secret code".

When the "approval close secret code" is set, the "edit close secret code" may be performed until the data editing is normally completed. Upon receiving the input of the "approval close secret code", the editing contents of the data in the block 132 or the block 132 are approved and normally finished and closed.

These "viewing open secret code" "edit open secret code", "viewing close secret code", "edit close secret code", "approval close password code" or a combination of the data are set in each block 132, or in blockchain data area 130, or a memory storage area 140 referred to by the data processing application.

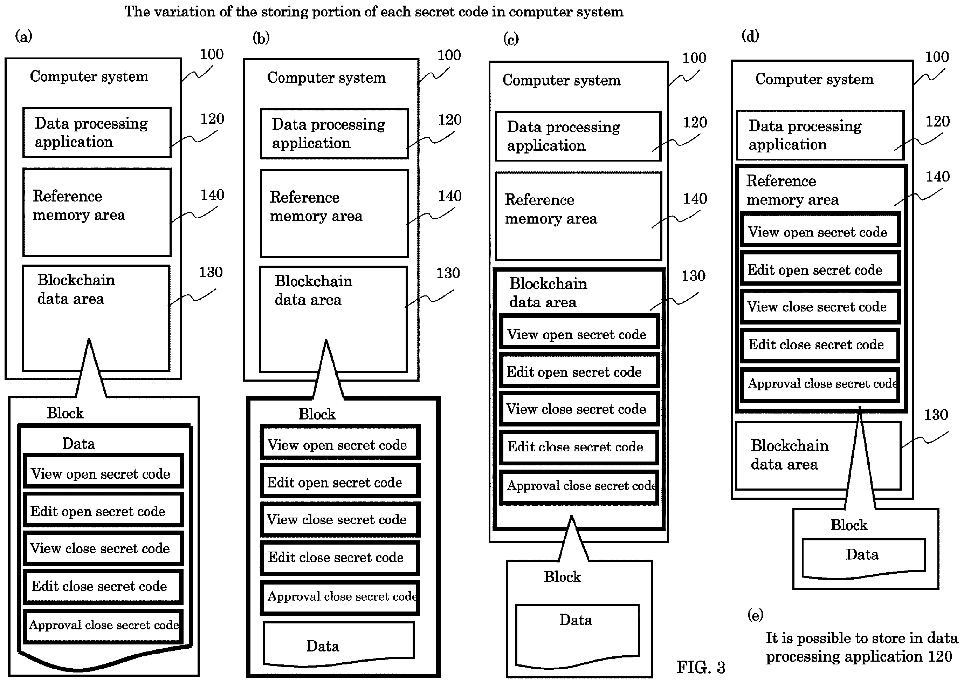

FIG. 3 is a drawing explaining variations in the storage locations or regions of various secret codes in each computer system.

FIG. 3 (a) shows an example in which various secret codes are stored as "data" in the block 132 in the blockchain data area 130. A participant can access the block 132. The secret codes are required to access the data in the block 132.

FIG. 3 (b) shows an example in which various secret codes are stored in the block 132 itself in the blockchain data area 130. The secret codes are required to access the block.

FIG. 3 (c) shows an example in which various secret codes are stored in the blockchain data area 130 itself. The secret codes are required for accessing the blockchain data area 130.

FIG. 3 (d) is an example in which various secret codes are given to other reference memory areas 140 different from the blockchain data area 130. A participant needs to input secret codes to access the blockchain data area 130, the block and the intra-block data and to collate with secret codes stored in the reference memory area 140.

FIG. 3 (e) is an example in which various secret codes are given to a data processing application 120. The participant needs to input various secret codes to access the blockchain data area 130, the block and the intra-block data and to collate it with secret codes stored in the data processing application 120.

The description of the other components of FIG. 1 is continued.

A blockchain data area 130 is a data area in which a blockchain 131 is developed in common in each computer system 100.

The reference memory area 140 is a memory area other than the blockchain data area 130 and can be used for various purposes.

Next, a data processing application 120 is described.

The data processing application 120 is an application that each computer system 100 is provided. At least the following data processing flow control function 121 is provided with functions of a closing function 125.

A data processing flow control function 121 performs flow control of data processing along a sequence of the blockchain. Editing data and hash value data reported from each computer system in charge of each block 132 are stored in a corresponding block 132 of a blockchain developed in a blockchain data area 130, and the progress of processing of the blockchain 131 is managed.

A data processing flow control function 121 receives a hash value as a result of a data editing function 123, which is notified by a data processing application 120 of each computer system 100 in charge of data editing of a block 132 of each stage of a blockchain 131 by a data processing application 120 of each computer system 100 and receives a hash value as a result of the hash value calculation function 125. The blockchain data area 130 is provided with a data storage function for updating and storing data in the corresponding block 132 of the blockchain 131 constructed in the blockchain data area 130. That is, the data processing flow control function 121 of all the computer systems 100 that participate, ensures that each edition data of each block 132 of the common blockchain 131 is updated in common among the participant computers. The blockchain data area 130 may be a part for recording and holding the log data.

The open function 122 receives the input of the open secret code, and when the authentication of the open secret code is successful, opens the block 132 or data in the block 132 of the stage. When the block 132 is opened, the state of a block which is tied as an opened block 132 and cannot be accessed from the outside. When the data in the block 132 is opened, the data (data file, data record, data field). The data content can be viewed by opening the data. When the authentication of the viewing open secret code is successful as described later, the open function 122 permits access to the block 132 or the data in the block 132, allows the block 132 to edit the data if the authentication of the editing open secret code is successful.

The data editing function 123 edits the data in the opened state by receiving the input of the open secret code. In the blockchain 131, a data editing function 123 executes data processing of data processing in this current stage in charge of the editing data against to the previous data taken over from the block 132 in the preceding stage.

The hash value calculation function 124 calculates the hash value according to the predetermined hash function on the basis of two data for interweaving, the one is the hash value data taken over from the block 132 in the preceding stage and the latter is the editing data obtained in the current block 132 of the stage. The data editing function 123 can also include a hash value calculation function 124.

The close function 125 receives the input of the close secret code and closes the block 132 or the data in the block 132 normally.

When the block 132 is closed, the state of the block 132 which is tied as a block 132 and can be viewed from the outside is normally and returned to a state where the block 132 cannot be accessed from the outside. When the data in the block 132 is closed, the data (data file, data record, data field) in the block 132 are normally finished and closed, and the data content cannot be viewed. When the authentication of the viewing close secret code is successful as described later, the close function 125 returns the data in the block 132 and the block 132 to the non-accessible state. If the authentication of the edit close secret code is successful, the editing content to the data in the block 132 and the block 132 is determined, and the data are updated and closed to return to a state that cannot be accessed.

Thus, the data processing of each block 132 in the blockchain 131 is executed in the computer system, the data processing of the block 132 adjacent to the stage from the preceding stage to the next stage is taken over and the data processing is executed. In this case, the data processing in the computer in charge are executed by the flow control function 121, the open function 122, the data editing function 123, the hash value calculation function 124, and the function of the close function 125 of the data processing application 120 are used to execute the editing of the blockchain of the blockchain.

Variations in the takeover method of edited data between adjacent blocks are described hereinbelow.

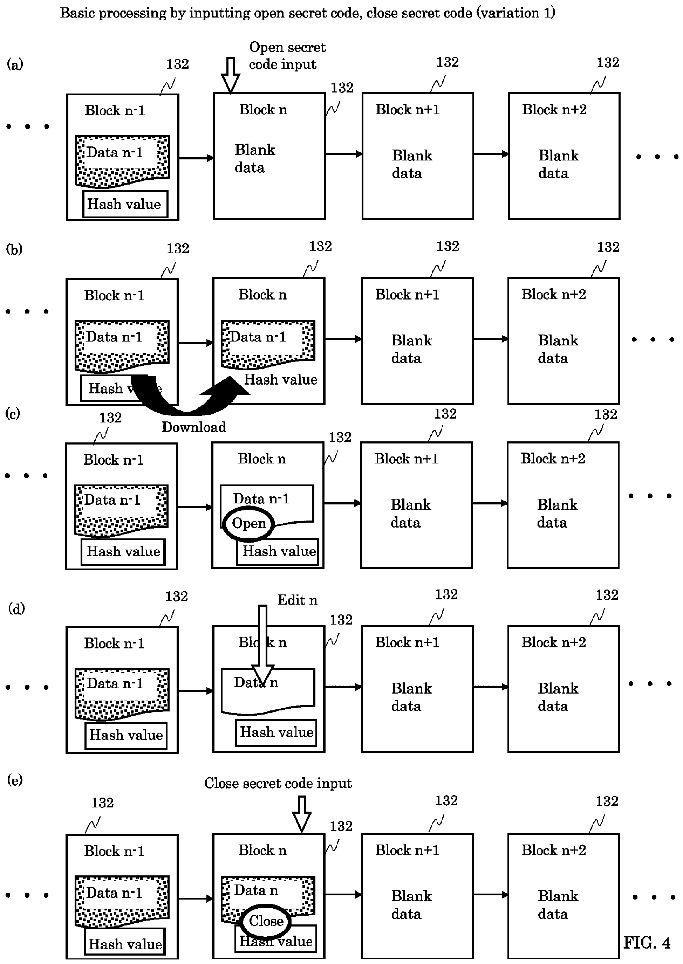

From FIG. 4 to FIG. 9 are drawings showing the variation of the takeover method of edited data between adjacent blocks in a simple manner.

The first variation of the takeover method is a system that takes over the edited data from the previous block when the authentication is established by inputting the open secret code in the step.

The open secret code may be any of a viewing open password code and an edit open secret code. For example, an edit open secret code is described below.

The close secret code may be any of a viewing close secret code, an edit close secret code, and an approval close secret code. For example, an edit close secret code or an approval close secret code are described.

FIG. 4 is a drawing showing a first variation of the takeover method.

When the data processing flow control function 121 recognizes the start of the processing of the abutting stage, an open secret code is inputted to an open function 122 in the computer system in the current stage as shown in FIG. 4 (a). Here, the editing open secret code is used.

When the authentication of the open secret code is established in the open function 122, as shown in Fig. 4 (b), the edited data in the preceding stage and the hash value are downloaded and delivered between the previous data processing application 120 and the data processing application 120 in the current stage.

Next, as shown in FIG. 4 (c), the open function 122 opens the edited data taken over from the preceding stage. When the received edited data is encrypted, the decoding processing may also be executed.

Next, as shown in Fig. 4 (d), data editing is performed by a data editing function 123. When the data editing processing of the abutting stage is finished, as shown in Fig. 4 (e), when a close secret code is inputted to the close function 125, the hash value is calculated, and the edited data of the current stage are normally finished and closed. For example, the close secret code is an edit close password code.

Thus, since the hash value of the block 132 in the preceding stage is taken over to the following block 132 and the hash value of the block 132 of the current stage is taken over in the next block 132 of the next stage, the continuity of the block 132 by the hash value is destroyed before and after the alteration of the editing data in the block 132 and the data alteration is virtually impossible.

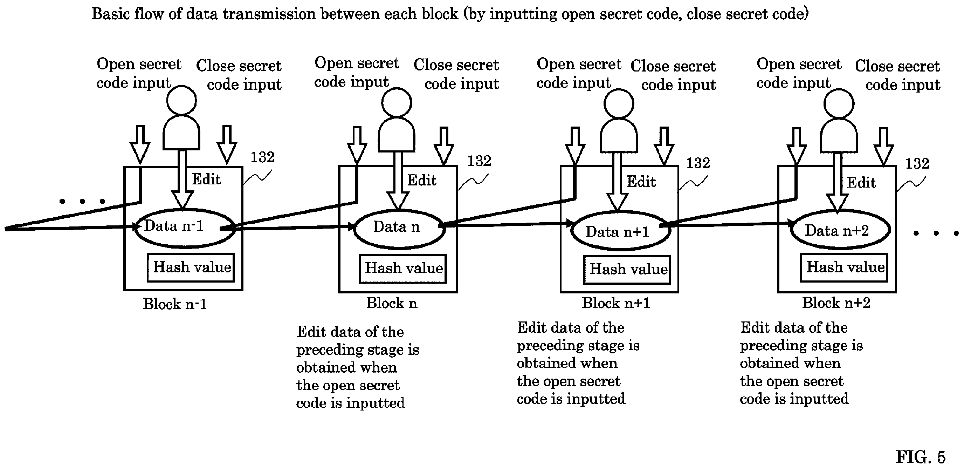

FIG. 5 is a drawing schematically illustrating the exchange of data between the blocks 132 in the first takeover system. The input of the open secret code, the input of the close secret code and the data processing between stage from N-1 stage to N+2 stage are shown. For example, the open secret code is an edit open secret code, and the close secret code is an edit close secret code.

Then, the second variation of the takeover method is a method that takes over the edited data from the block 132 of the current stage to the next stage block 132 when the authentication is established by inputting the close secret code in the current stage.

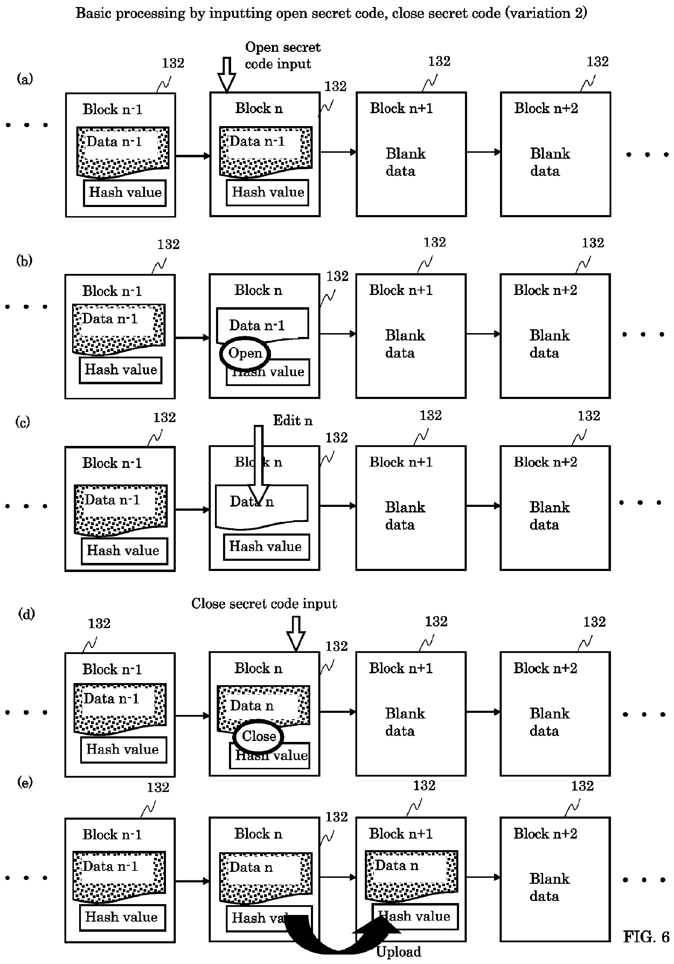

When a data processing flow control function 121 recognizes the start of the processing of the abutting stage, an open password code is inputted to an open function 122 in a computer system in the current stage as shown in Fig. 6 (a). Here, the editing open secret code is used. In this case, already-stage edited data and hash value are already stored in the current stage.

As shown in Fig. 6 (b), if the authentication of the open secret code is established in the open function 122, the edited data is opened and edited. When the received edited data is encrypted, the decoding processing may also be executed.

Next, as shown in Fig. 6 (c), data editing is performed by a data editing function 123.

Then, when the data editing processing of the current stage is finished, a close secret code is inputted to the close function 125 as shown in Fig. 6 (d). A hash value is calculated by the input of the close secret code, and the edited data is normally finished and closed. For example, the closed secret code is an edit close secret code.

Next, as shown in FIG. 6 (e), the edited data of the stage and the hash value are uploaded to the next stage block 132 and taken over to the next block.

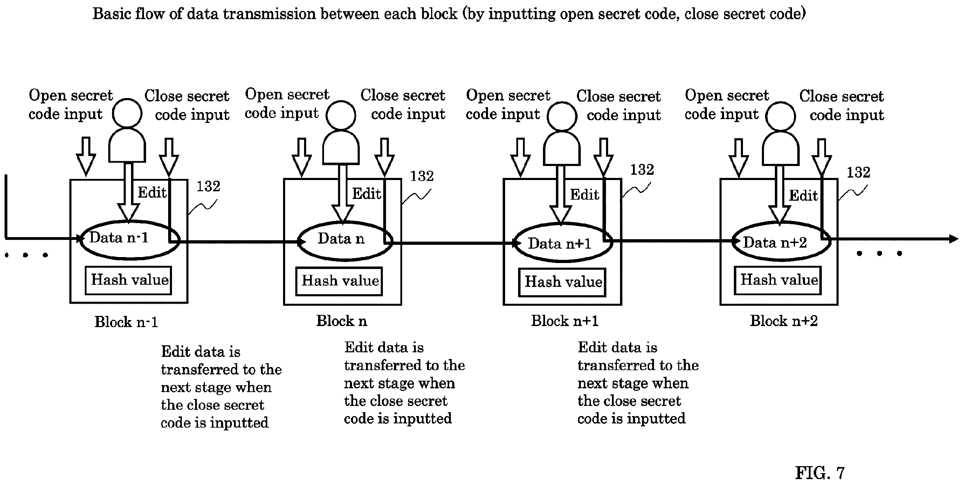

FIG. 7 is a drawing schematically illustrating the exchange of data between blocks in the second takeover method. The input of the open secret code, the input of the close secret code and the data processing between stage from N-1 stage to N+2 stage are shown. For example, the open secret code is an edit open secret code, and the close secret code is an edit close secret code.

Then, in the third variation of the takeover method, when authentication is established by inputting the approval close secret code in the current stage, the edited data is taken over from the preceding block 132 of the stage to the next stage block 132.

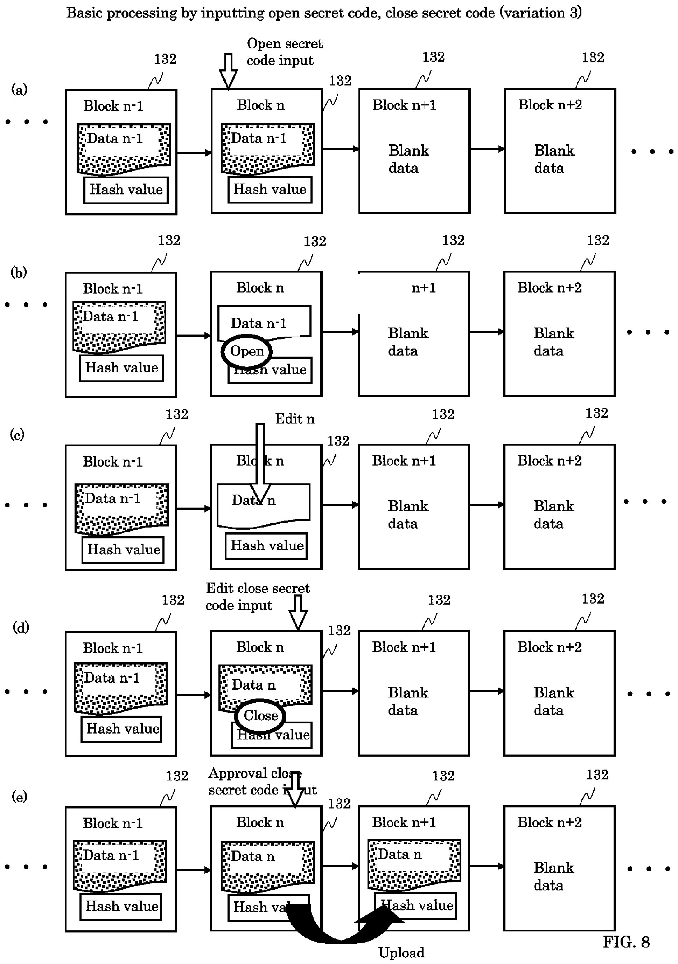

When a data processing flow control function 121 recognizes the start of the processing of the abutting stage, an open secret code is inputted to the open function 122 in the computer system 100 in the current stage as shown in FIG. 8 (a). Here, the open secret code is an edit open secret code. In this case, the edited data and hash value of the preceding stage are already transmitted and stored in the block of current stage.

As shown in FIG. 8 (b), if the authentication of the open secret code is established in the open function 122, the edited data is opened to edit.

Next, as shown in FIG. 8 (c), data editing is performed by a data editing function 123.

Then, when the data editing processing of the current stage is finished, the close secret code is inputted to the close function 125 as shown in Fig. 8 (d), and when the authentication of the close secret code is established, data editing is finished. For example, the close secret code is an edit close secret code.

Then, as shown in FIG. 8 (e), the approve authority person inputs an approval close secret code, and when the authentication of the approval close secret code is established in the close function 125, the hash value is calculated, the edited data is normally finished and closed, and the edited data and the hash value of the current stage are transmitted to the next block in the form of uploading the edited data and the hash value of the next stage to the next block.

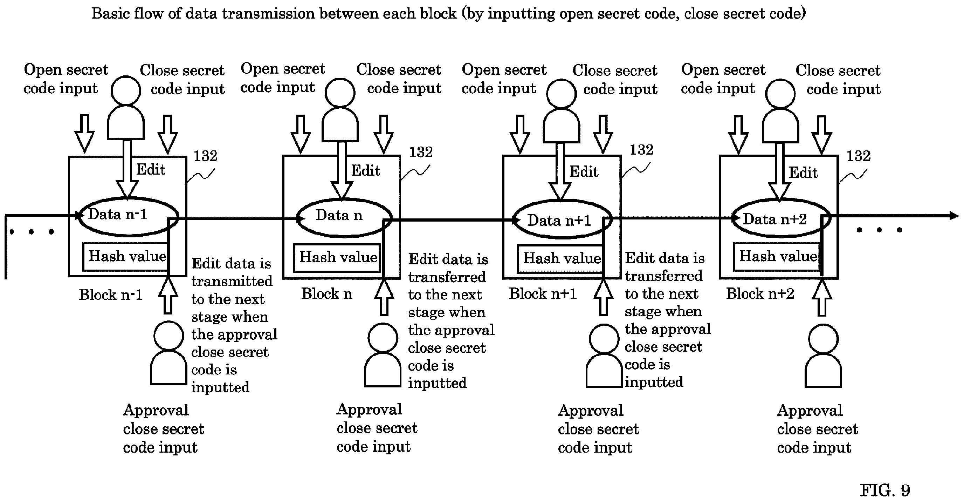

FIG. 9 is a drawing schematically illustrating the exchange of data between blocks in the third takeover method. The input of the open secret code, the input of the close secret code and the data processing between stage from N-1 stage to N+2 stage are shown. For example, the open secret code is an edit open secret code and the close secret code is an edit close secret code inputted by the person in charge shown upward in the block, and the code inputted by the approve authority person shown below in the block is approve close secret code

Next, a device for executing the encryption processing and the decoding processing is described.

In the blockchain system of the present invention 1, the open secret code and the close secret code are set for the block 132 or the data in the block 132, and the data processing is advanced along the flow of the blockchain 131 while specifying the person in charge of the data processing of the block 132 by determining the input of the open secret code and the close secret code. Data are exchanged between the computer systems 100 connected in a network environment such as peer-to-peer. Therefore, it is preferable to communicate the data on the network in the form of encrypting the data in order to improve the security.

After the encrypted data is sent to a block 132 in charge, it is necessary to decrypt the data when performing data processing. Since the data are exchanged between the blocks in a network environment such as peer-to-peer, access to the information of the part can be performed in accordance with the data access authority of the person in charge of the part of the data. Therefore, it is preferable that the partial encryption is performed so that only the person having the access authority can be decrypted instead of all the blocks.

Then, the open function 122 and the close function 125 are devised to installing the encryption processing and the decryption processing.

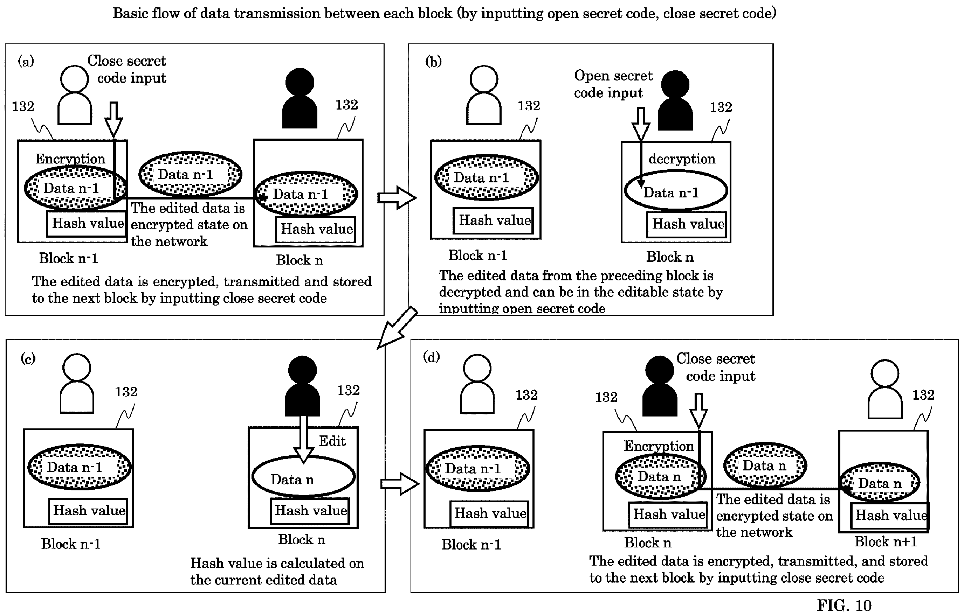

FIG. 10 is drawing showing the encryption processing/ decryption processing over a network. In this example, the takeover method is the second takeover method which has described in FIG. 6 and Fig. 7, it may be considered in a similar manner in that the open secret code and a close secret code are set. In this case, for example, the open secret code is an edit open secret code, and the close secret code is an edit close secret code.

As shown in FIG. 10 (a), when the close secret code is inputted in the preceding stage, the data edition is normally finished and closed by the close function 125. In this configuration, the editing data is encrypted when the close function 125 is normally performed, and the encrypted data are made to be encrypted edited data. For example, the close secret code is used as an encryption key.

When the close secret code is the biological information code of the user, the biological information code of the user is used as an encryption key. Therefore, the corresponding decryption key needs to be separately notified to the person in charge of the next block in the next stage.

Thus, the encrypted data is transmitted through the network in the form of uploading the encrypted data to the next block in the next stage.

Then, as shown in FIG. 10 (b), when the edit open secret code is inputted in the current stage, the edited data is opened by the open function 122, and the open function 122 executes the decryption processing, and the encrypted edited data can be decrypted as the edited data of the plain data. The open secret code is also used as a decryption key in this example.

Here, if the open secret code is the biological information code of the operator, the biological information code can function as a decryption key, but it is assumed that the biological information code inputted in the preceding block of the preceding stage but the block to be operated of the current stage is shift to the next following stage. Therefore, the biological information code of the operator of the preceding stage should be acquired separately by the operator of the next stage in order to input and decrypt.

Thus, the encrypted edited data can be decrypted in plain, viewing and editing can be performed.

In the case where the data access right of the person in charge of the current block of the current stage is partially limited, the decryption key inputted by the person cannot be decrypted all portion but partial portion, and it is possible to view and edit for the partially encrypted portion.

Next, as shown in FIG. 10 (c), a hash value is calculated by a hash value calculation function 124. When a close secret code is inputted in a stage as shown in Fig. 10 (d), the edited data is closed by a close function 125. The close function 125 performs encryption processing using the close secret code as an encryption key and transmit to the block 132 of the next stage as encrypted edited data via a network.

Thus, in the abovementioned pre-scheduled type of blockchain system 1, the encrypted edited data are always exchanged on the network by being related with the encryption processing and the decoding processing in the open function 122 and the close function 125, and the decrypted state is obtained when data to transmitted to each block 132 in the current stage.

As shown in FIG. 10, data is transmitted along the flow of the blockchain from the block of the preceding stage to the block of the current stage and from the block of the current stage to the block of the subsequent next stage so on. After the data is transmitted to the block of the subsequent next stage, edited data and hash value as the editing result in its own stage is stored in the block of its own stage. When the encryption processing is performed, the encrypted edited data and the hash value are stored in the block of its own stage.

The basic configuration example of the pre-scheduled type of blockchain system 1 according to the first embodiment is an example of data exchange in a blockchain 131 constructed in common in the blockchain data area 130.

Although the connection of the blockchain 131 scheduled by the blockchain generation part 110 of the authority computer system 100A has been described as a simple one-dimensional chain, a variety of blockchains 131 can be possible for the pre-schedule type of blockchain system 1. In the conventional blockchain system such as a bit coin, the processing contents of the block of the next stage are not fixed, a person in charge of the next stage is not fixed. Therefore, only one-dimensional blockchain can be established. However, in the present invention, the blockchain generation part 110 can freely determine and control the connection of the data processing progress and the block 132 by pre-scheduling of the process.

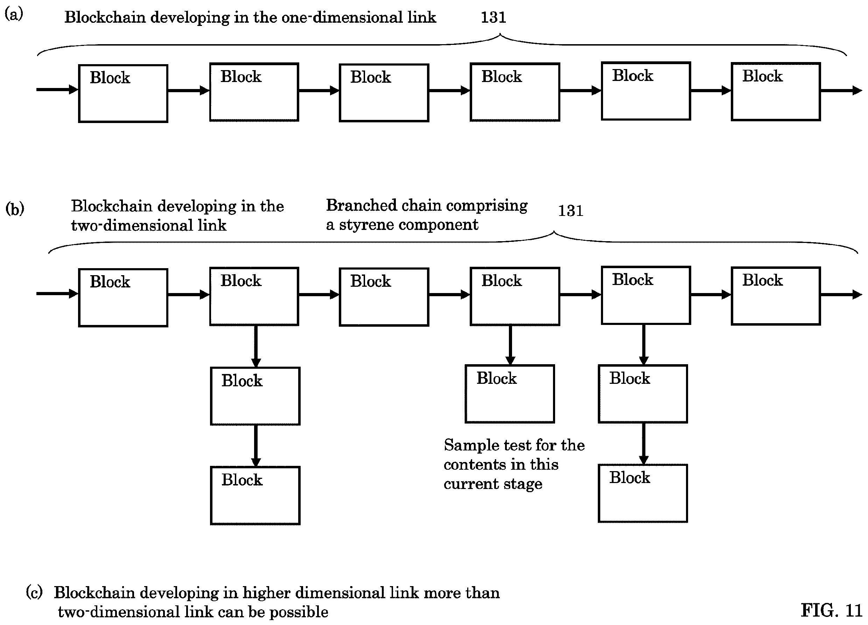

FIG. 11 is a drawing showing variations in connection of various blockchains 131 in the present invention. FIG. 11 (a) shows an example of a one-dimensional blockchain 131.

FIG. 11 (b) shows an example of a two-dimensional blockchain 131. The main blockchain 131 is one-dimensional, but partially has two-dimensional portion. There are side chains provided as a part of a main one-dimensional chain. The content of the data processing of the main linear branch is not particularly limited. For example, when the main blockchain 131 is used as the management data of the production process, an intermediate goods product can be provided differently from the main product. The intermediate goods are provided by the side branch chain as a part of the production process. For example, the progress of the main article of manufacture is keep on continuing, but the quality test may be performed to the intermediate-stage product only. Thus, the pattern of the blockchain 131 has various variations. The two-dimensional blockchain 131 with side branch chain can be applied to the pre-scheduling type of blockchain system 1.

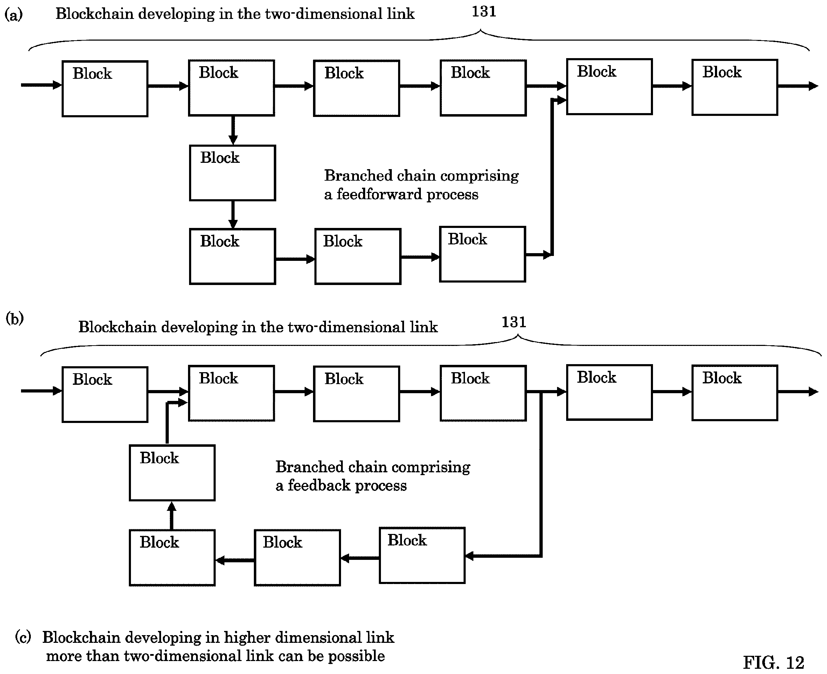

Next, in FIG. 12 (a), the main blockchain 131 is one-dimensional, but is partially two-dimensionally divided by a feed-forward type branch. In the flow of various data processing, processing proceeds in parallel at some portion, which may result in a process in which both are integrated into one. If the destination of the straight-chain branch described in FIG. 11 (b) is eventually integrated into the main blockchain 131, it becomes the type of FIG. 12 (a). A two-dimensional blockchain 131 with a feed-forward branch may also be an object of a planned blockchain system 1.

Next, FIG. 12 (b) shows an example in which the main blockchain 131 is one-dimensional, but two-dimensionally divided by a feedback type branch. In various data processing streams, the processing content may be recursively regression at some portion.

In this way, if the connection of the block 132 in the blockchain 131 is not one-dimensional, control of the order and timing of data processing for each block 132 is required. Then, each data processing application 120 has a sequence control function for controlling the transition sequence of each block of the primary blockchain and the transition sequence of each block of the secondary blockchain. Examples of sequence control include a block 132. As a condition to start a data editing function of a block in a primary blockchain and a secondary blockchain which need to be completed before starting the data processing related to the block 132 of a stage described in the sequence control function, the correct sequence control is possible.

As shown in FIG. 12 (c), higher-dimensional blockchain such as a three-dimensional is also possible.

In the case of a higher-dimension blockchain, each data processing application 120 is provided with a sequence control function, and when there are a primary blockchain, a secondary blockchain branched from a block included in the primary blockchain, and a tertiary blockchain branched from a block included in the secondary blockchain are constructed, the data editing function of a certain block 132 is not only input of the open secret code in the open function. When the condition is set as that all processing is completed prior to the start of data processing related to the block of the stage described in the sequence control function, the correct sequence control becomes possible if all the pre-scheduled all processing of blocks in the primary blockchain, the secondary blockchain, and the tertiary blockchain has been completed.

### Embodiment 2

As Embodiment 2, the basic configuration of the "dynamic generation type blockchain system" is described. The dynamic generation type blockchain system is roughly divided into two types.

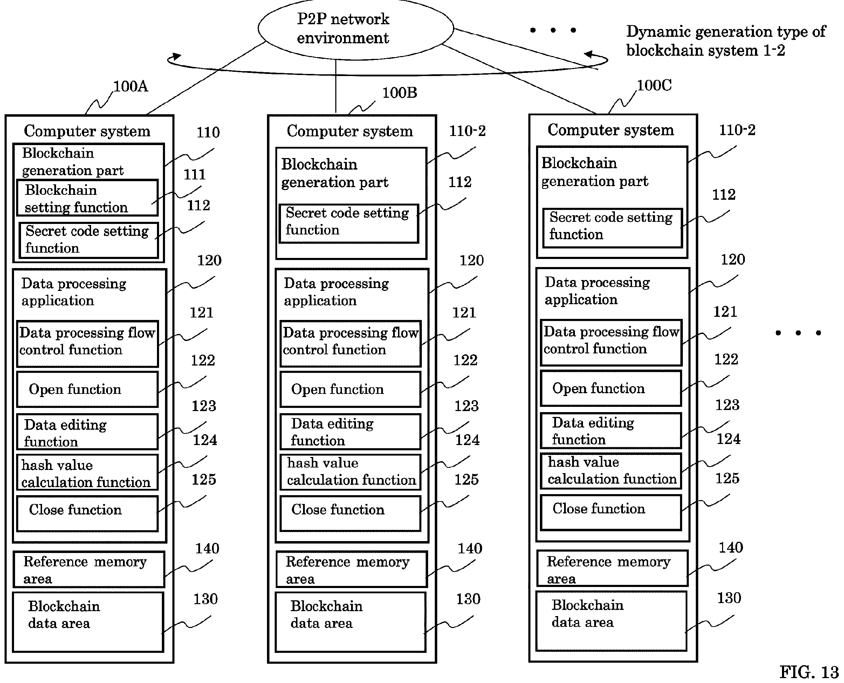

FIG. 13 is a drawing showing a basic configuration example of a dynamic generation type of blockchain system 1-2 of a first type. In a first type of dynamic generation type blockchain system 1-2, an authority computer system is present and a blockchain generation part 110 is provided, a data processing stage set in a data processing flow is blocked, a chain blockchain 131 is created, and a block data area 130 of each computer system 100 is generated in common. These points are the same as the Embodiment 1, the different point in this first type of the dynamic generation blockchain system 1-2 is that a computer system 100 to be in charge of processing of the next block 132 (at least a part of the blocks 132) has not nominated yet. The computer system 100 in charge of processing of current stage block 132 is capable of executing nominating processing for a computer system 100 in charge of the block 132 of the next stage.

FIG. 13 is a drawing showing a basic configuration example of a dynamic generation type blockchain system 1-2 of a first type. A component similar to that of FIG. 1 of Embodiment 1 is omitted here. Not only the authority computer system 100a but also the participating computer system 100 comprises a blockchain generation part 110, a data processing application 120, a data processing flow control function 121, an open function 122, a data editing function 123, a hash value calculation function 124, a close function 125, a blockchain data region 130, and other memory regions.

As shown in FIG. 13, the dynamic generation type blockchain system 1-2 of the first type according to the Embodiment 2 is also provided with a plurality of computer systems 100A, 100B and 100C. A data communication is possible via a network environment. For example, a peer-to-peer network environment can be employed.

In the example of FIG. 13, among the plurality of computer systems, a computer system 100A is an authority computer system.

The blockchain generation part 110 can execute the scheduling processing of the blockchain, the nominating processing of the computer system participating in the blockchain, and the setting processing of various kinds of secret codes in the same manner as in Embodiment 1.

However, the first type of dynamic generation blockchain system 1-2 according to the Embodiment 2 is characterized in that the computer system 100 in charge of at least a part of the blocks has not been nominated yet, and the participant is provided with flexibility for determining the next person in charge.

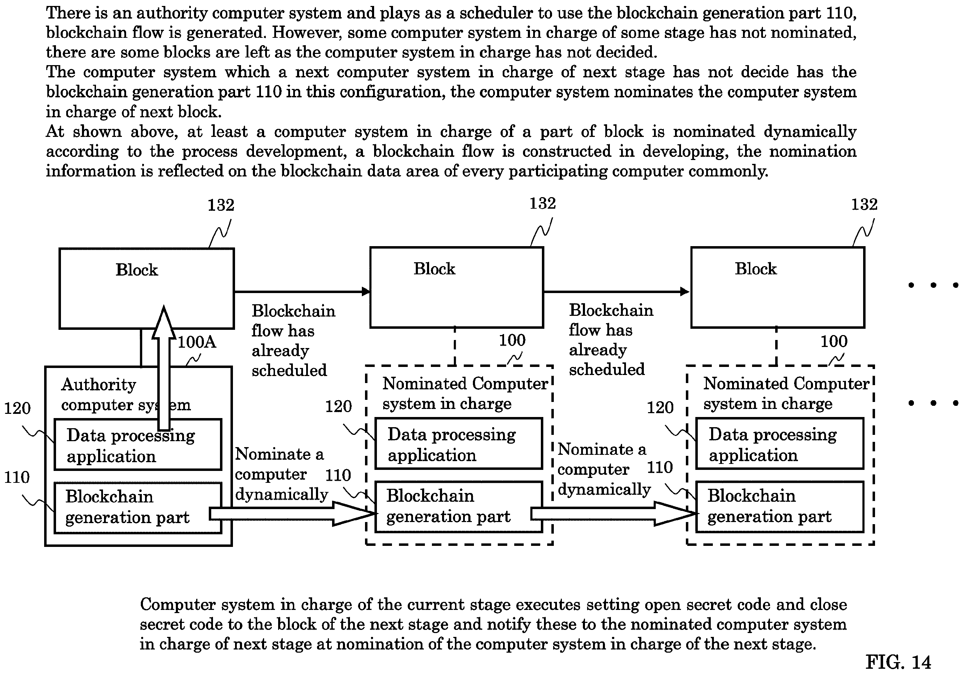

FIG. 14 is a blockchain system 1-2 of the first type according to Embodiment 2 of the present invention, in which a part of the nominate processing is not finished by the authorized person computer system 100A but the concept executed by other computer systems is briefly described. In the example of FIG. 14, the computer system in charge of the previous block 132 just before uses the blockchain generation part 110 to nominates a computer system 100 in charge of the next block in charge.

For example, for manufacturing a certain machine, an authority system determines a machine design, a product specification, an assembly procedure, a component specification, and the like, and when a process management system for manufacturing is to be generated by the blockchain system of the present invention, it is sometimes necessary to determine which manufacturer of the maker should be ordered, such as a part of assembly parts. Also, for a component maker capable of performing the performance corresponding to the processing period (component procurement period) of the block 132, it is possible to appropriately determine the person in charge of the manufacturer. Thus, it may be convenient for the block participants to nominate the person in charge of processing the block 132 in the next stage due to various factors. Therefore, with systematic flexibility, the authorized computer system 100A entrusts some nomination processing to the other participating computer system 100.

In this case, the person in charge of the block 132 in the preceding stage in the blockchain 131 is convenient if the person in charge of the block 132 of the next stage has authority to set various secret codes for accessing and editing the data. In this embodiment, the blockchain generation part 110 is provided with secret code setting functions. In other method, the person in charge of the next stage is determined and the nomination data is transmitted to the authority computer system 100A, and the authority computer system 100A proceed the nomination instead.

As various personal identification codes, for example, a PIN code, a text code, a bar code printed on a medium, a two-dimensional dot code printed on a medium, an IC card, and biological information of a person in charge can be employed.

The same as Embodiment 1, as the variation of the secret code, two kinds of variations of "viewing open secret code" and "edit open secret code" can be used as an open secret code and three kinds of variations of "viewing close secret code", "edit close secret code" and "approval close secret code" can be used as a close secret code.

Next, a second type of dynamic generation type blockchain system 1-2 is described.

The basic configuration example of the second type of dynamic generation blockchain system 1-2 is similar to that of FIG. 13, and the description thereof is omitted here.

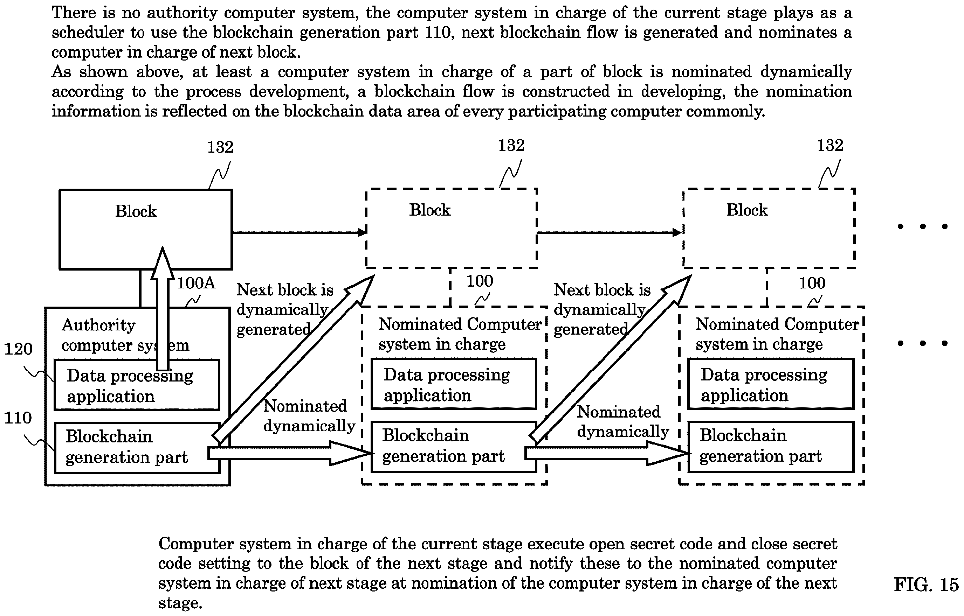

In the second type of dynamic generation blockchain system 1-2, the blockchain generation part 110 of the authority computer system 100A makes blocks for data processing stage set in the data processing flow in advance and pre-scheduling by the blockchain generation part 110, creates a chain blockchain 131, and is commonly generated in the block data area 130 of each computer system 100. However, this second type of dynamic generation type blockchain system 1-2 of Example 2, at least a part of the block is characterized in that the data processing at the block 132 is not assigned. It should be noted that the computer system 100 in charge may be nominated or may not be nominated. FIG. 15 is an example of a case where the computer system 100 in charge is not nominate.

FIG. 15 is a blockchain system 1-2 of the second type according to Embodiment 2 of the present invention. In the blockchain system 1-2 of the second type, the contents of the data processing in a part of the blockchain are not determined, and in the case where the nominate processing is not performed. In other words, FIG. 15 shows the concept of the data processing of the block and the nominate processing of the computer system in charge. In the example of FIG. 15, the computer system 100 in charge of the previous block 132 just before determines the contents of the data processing in the next stage block 132 by using the blockchain generation part 110.

For example, in the case of manufacturing a certain machine, when the authorized system determines the machine design, product specifications, assembly procedure, parts specifications, etc., and tries to generate a process control system for manufacturing with the blockchain system of the present invention. Some detailed designs may not be decided. In many cases, parts manufacturers who specialize in parts are better at detailed design. In addition, it may not be possible to decide which person in charge of which material manufacturer should place an order for processing materials. In this way, due to various factors, it may be convenient for the block participants to nominate the content of the processing of the next block and the person in charge. Therefore, with systematic flexibility, the authorized computer system 100A entrusts the content of data processing and the nomination processing to the computer system 100 which is used by another participant.

The person in charge of the next block is nominated through the "nomination function" described as the second function of the blockchain generation part 110 of Embodiment 1 and the "secret setting function" described as the third function. It can be carried out. That is, when setting the open secret code or the close secret code to be set in the next block, the person is associated with the operator of the nominated computer system 100 by associating the set open secret code or the close secret code with the operator of the nominated computer system 100. It will be appointed as the person in charge.

Further, it is convenient to have the authority to set the content of the data processing of the next block 132 in the blockchain 131. This can be done via the "blockchain setting function" described as the first function of the blockchain generation part 110 of Embodiment 1. For example, setting the flow of the blockchain, setting the connection between blocks, setting the processing content of each block, setting the data content to be inherited between blocks, and setting the presence or absence of data encryption processing when inheriting between blocks. There may be settings for the part that performs encryption processing. In this way, the blockchain generation part 110 of Embodiment 2 determines and sets the content of data processing to be performed in each block 132 and connects the flows of each block 132 to form a chain.

### Embodiment 3

Example 3 illustrates various applications of the blockchain system of the present invention.

The application examples of the blockchain system of the present invention may vary. Although some embodiments are described in this Embodiment 3, these specific examples are exemplary and applicable to a variety of systems. While various patterns may be present, it will be appreciated that the present invention may be applied flexibly.

The first application is an example of application to a procedure management system for managing a procedure flow in which each procedure is connected and is an example in which pre-scheduled type of blockchain system 1 is applied. The computer system is a computer system that is used by an entity or organization involved in each procedure, wherein the block corresponds to each stage of each procedure.

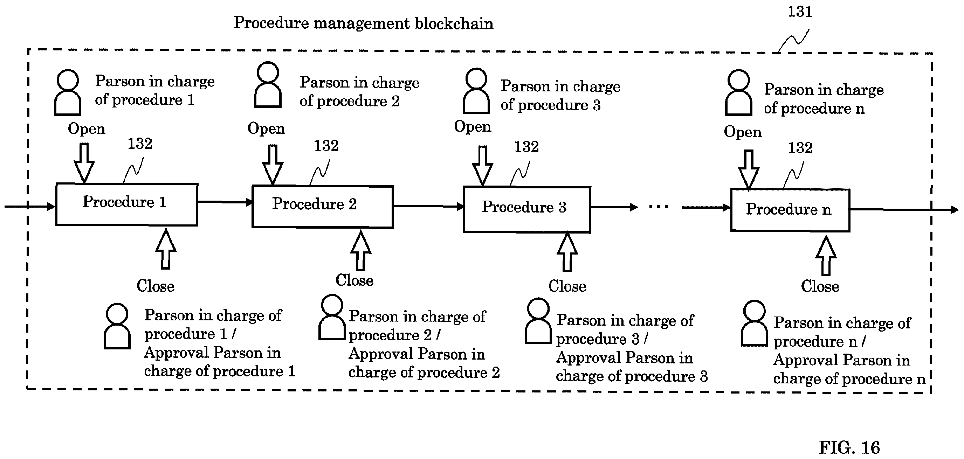

As shown in FIG. 16, a procedure management blockchain is generated in each blockchain data area 130 of the computer system which is scheduled by a blockchain generation part 110 according to the flow of the procedure.

In the example of FIG. 16, an editing open secret code is given to a person in charge drawn upper portion of each block 132, and an editing close secret code or an approval close secret code is given to a person in charge drawn under each block 132. Procedure processing assigned to each block 132 is executed, and data processing indicating the contents is inputted. Editing data and a hash value are sent between the blocks 132, and procedure processing proceeds.

In the example of FIG. 16, the procedure is N stages, a block 132 is provided from the procedure 1 to the procedure N, one procedure management blockchain 131 is generated, and an open secret code and a close secret code are set for each block by the secret code setting function. For example, for the block 132 of the procedure 1, a code based on the biological information of the person in charge of the procedure 1 is set as the open secret code, and a code based on the biological information of the person in charge of the procedure 1 or the approver of the procedure 1 is set as the close secret code. There may be a variety of blockchain systems for procedure management.

When the viewing open secret code and the viewing close secret code are set, the person holding the code can confirm the progress of the procedure management blockchain in any time. That is, the "visualization for progress of the procedure" can be performed.

The second application is an example of application to a process management system for managing a process flow in which each process is connected and is an example in which a pre-scheduled type of blockchain system 1 is applied. The computer system is a computer system that is used by an entity or organization involved in each process, wherein the block corresponds to each stage of each process.

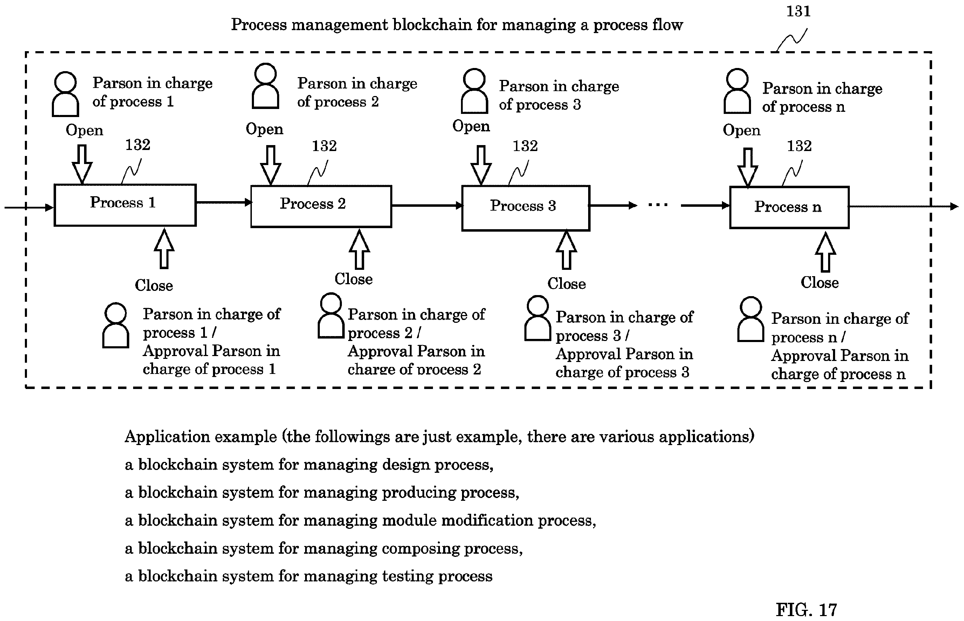

As shown in FIG. 17, in accordance with the flow of the process, a process management blockchain 131 is generated in each blockchain data area 130 of the computer system participating in the blockchain generation part 110. In the example of FIG. 17, the process comprises N stages, a block 132 is provided from the process 1 to the process N, one process management blockchain 131 is generated, and an open secret code of a person in charge, and a close secret code of an approver are set for each block by a secret code setting function. Process management assigned to each block 132 is executed, and data processing indicating the contents is input. Editing data and a hash value are sent between the blocks 132, and process management processing proceeds.

There may be a variety of blockchain systems for process management such as a blockchain system for managing design process, a blockchain system for managing producing process, a blockchain system for managing module modification process, a blockchain system for managing composing process, a blockchain system for managing testing process, and a blockchain system for managing inventory quality.

The third application is an example of application to a business flow management system for managing each business flow and is an example in which a pre-scheduled type of blockchain system 1 is applied. The computer system is a computer system that is used by an entity or organization involved in each business flow, wherein the block corresponds to each stage of each business flow.

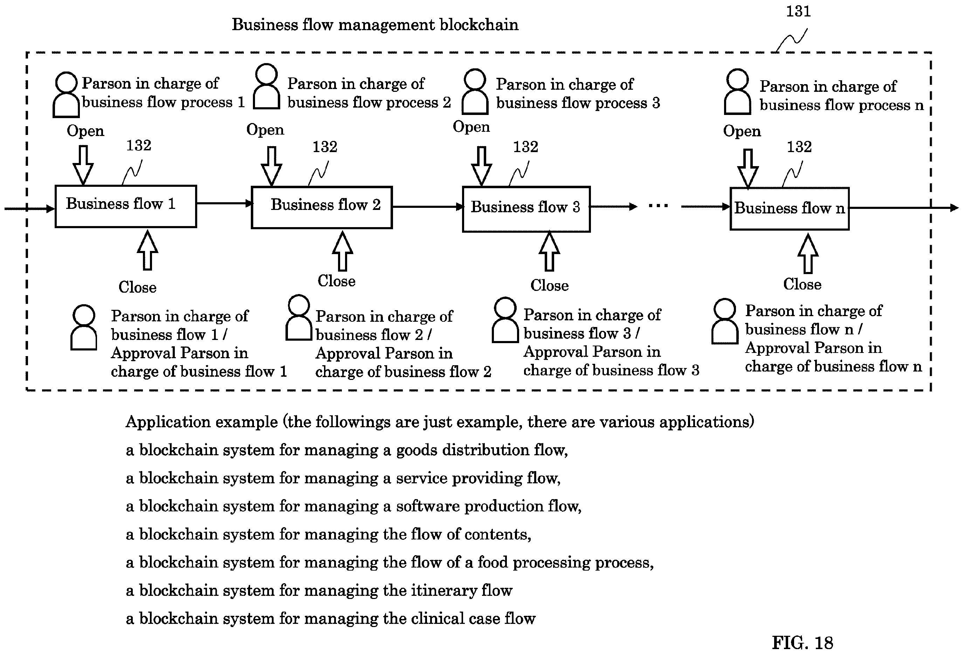

As shown in FIG. 18, a business flow management blockchain 131 is generated in each blockchain data area 130 of each computer system which participates by the blockchain generation part 110 according to the flow of a business flow. In the example of FIG. 18, a business flow comprises N stages, block 132 are provided from a business flow 1 to a business flow N, one business flow management blockchain 131 is generated, and an open secret code of a person in charge, a close secret code of a person in charge or an approver in charge are set for each block by the secret code setting function. Business flow processing assigned to each block 132 is executed, and data processing indicating the contents is inputted. The edited data and the hash value are sent between the blocks 132, and the business flow management is advanced.

There may be a variety of blockchain systems for business flow management such as a blockchain system for managing a goods distribution flow, a blockchain system for managing a service providing flow, a blockchain system for managing a software production flow, a blockchain system for managing the flow of contents, a blockchain system for managing the flow of a food processing process, and a blockchain system for clinical case management flow.

A fourth application is an example of application to a work flow management system for managing each work flow and is an example in which a pre-scheduled type of blockchain system 1 is applied. The computer system is a computer system that is used by an entity or organization involved in each work flow, wherein the block corresponds to each stage of each work flow.

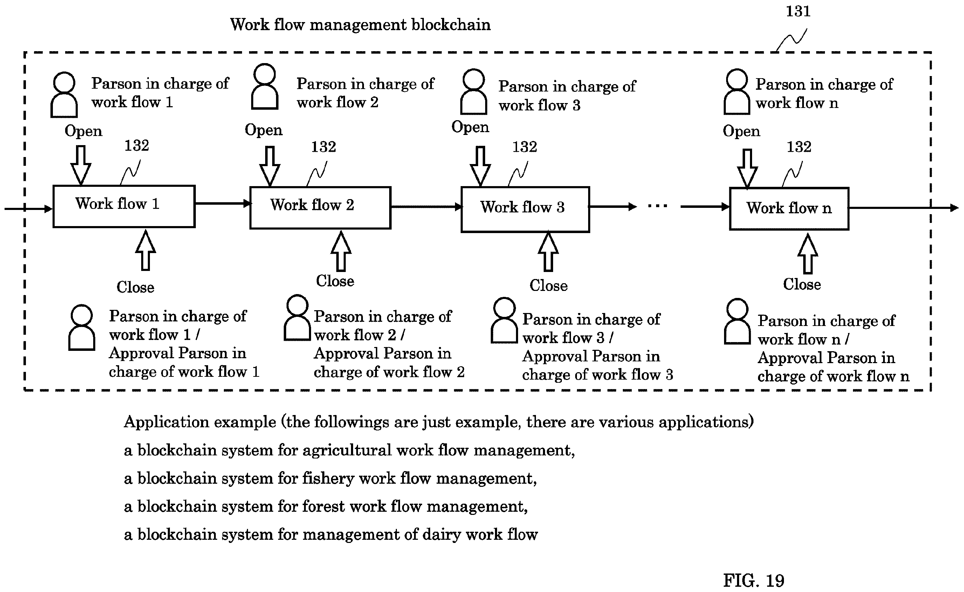

As shown in FIG. 19, a work flow management blockchain 131 is generated in each blockchain data area 130 of the computer system participating in the blockchain by the blockchain generation part 110 according to the flow of a work flow. In the example of FIG. 19, a work flow comprises N stages, block 132 are provided from a work flow 1 to a work flow N, one work flow management blockchain 131 is generated, and an open secret code of a person in charge, a close secret code of a person in charge and an approver in charge are set for each block by a secret code setting function. Work flow management processing assigned to each block 132 is executed, and data processing indicating the contents is inputted. Editing data and a hash value are sent between the blocks 132, and work flow management processing progresses.

There may be a variety of blockchain systems for work flow management such as a blockchain system for agricultural work flow management, a blockchain system for fishery work flow management, a blockchain system for forest work flow management, and a blockchain system for management of dairy work flow.

The fifth application is an example of application to a project flow management system for managing each project flow and is an example in which a pre-scheduled blockchain system 1 is applied. The computer system is a computer system that is used by an entity or organization involved in each project flow, wherein the block corresponds to each stage of each project flow.

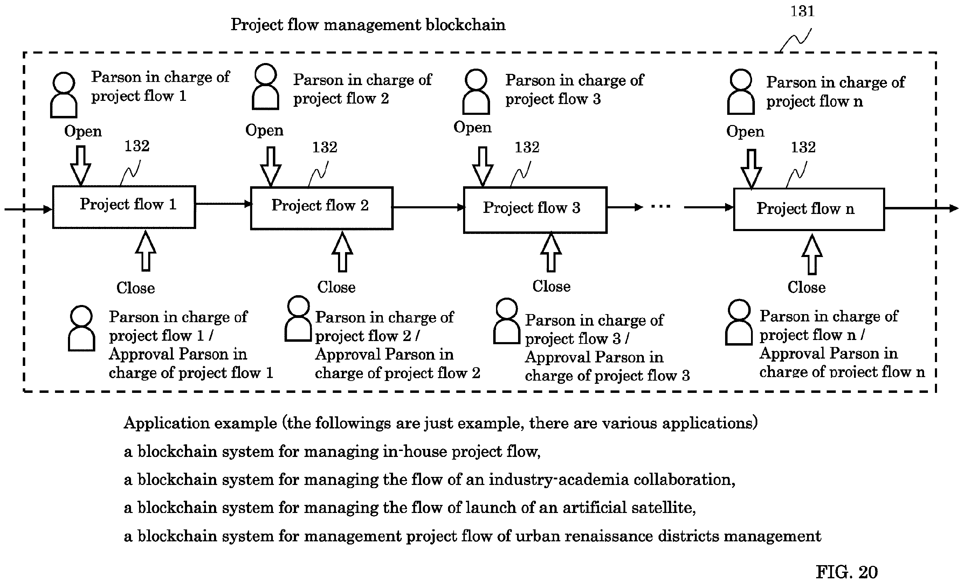

As shown in FIG. 20, according to the flow of the project flow, a project flow management blockchain 131 is generated in each blockchain data area 130 of the computer system participating in the blockchain by the blockchain generation part 110. In the example of FIG. 20, a project flow comprises N stages, block 132 are assigned from a project flow 1 to a project flow N, one project flow management blockchain 131 is generated, and an open secret code of a person in charge and a close secret code of a person in charge and an approver in charge are set. Project flow processing assigned to each block 132 is executed, and data processing indicating the contents is input. Editing data and a hash value are sent between the blocks 132, and the project flow processing proceeds.

There may be a variety of blockchain systems for project flow management such as a blockchain system for managing in-house project flow, a blockchain system for managing the flow of an industry-academia collaboration, a blockchain system for managing the flow of launch of an artificial satellite, a blockchain system for management project flow of urban renaissance districts management.

The sixth application is an example of application to a trading flow management system for managing each trading flow and is an example in which a pre-scheduled blockchain system 1 is applied. The computer system is a computer system that is used by an entity or organization involved in each trading flow, wherein the block corresponds to each stage of each trading flow.

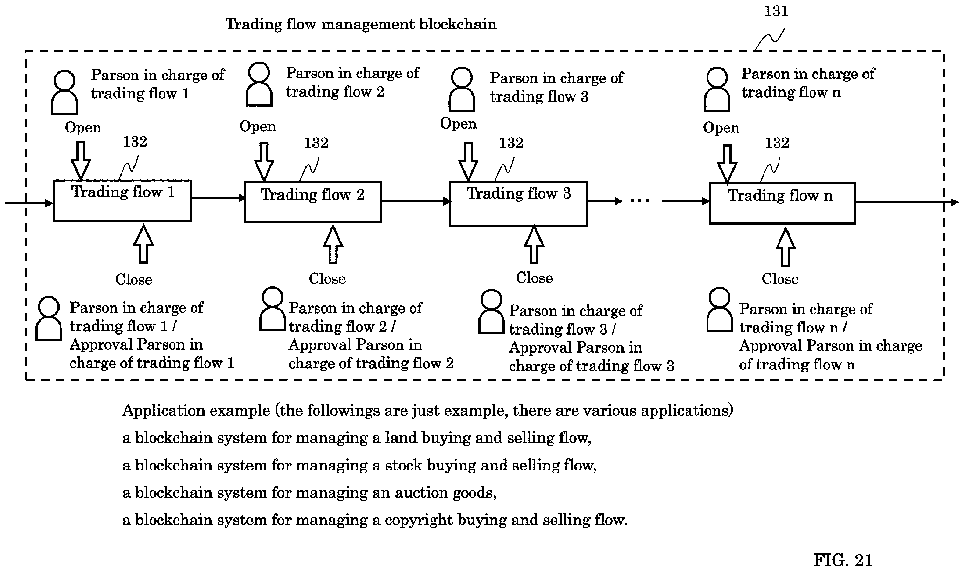

As shown in FIG. 21, a trading flow management blockchain 131 is generated in each blockchain data area 130 of a computer system which participates in the blockchain by the blockchain generation part 110 according to the flow of the buying and selling flow. In the example of FIG. 21, a buying and selling flow comprises N stage, block 132 are assigned from a buying and selling flow 1 to a buying and selling flow N, one trading flow management blockchain 131 is generated, and a open secret code of a person in charge, a close secret code of a person in charge and an approver are set for each block by the secret code setting function. Transaction flow processing assigned to each block 132 is executed, and data processing indicating the contents is inputted. The edited data and the hash value are sent between the blocks 132, and the dealing flow processing proceeds.

There may be a variety of blockchain systems for trading flow management such as a blockchain system for managing a land buying and selling flow, a blockchain system for managing a stock buying and selling flow, a blockchain system for managing an auction goods, and a blockchain system for managing a copyright buying and selling flow.

The seventh application is an example of application to a determination flow management system for managing a flow for each determination or the like and is an example in which a pre-scheduled type of blockchain system 1 is applied. The computer system is a computer system that is used by an entity or organization involved in each determination creation flow, wherein the block corresponds to each stage of each determination flow.

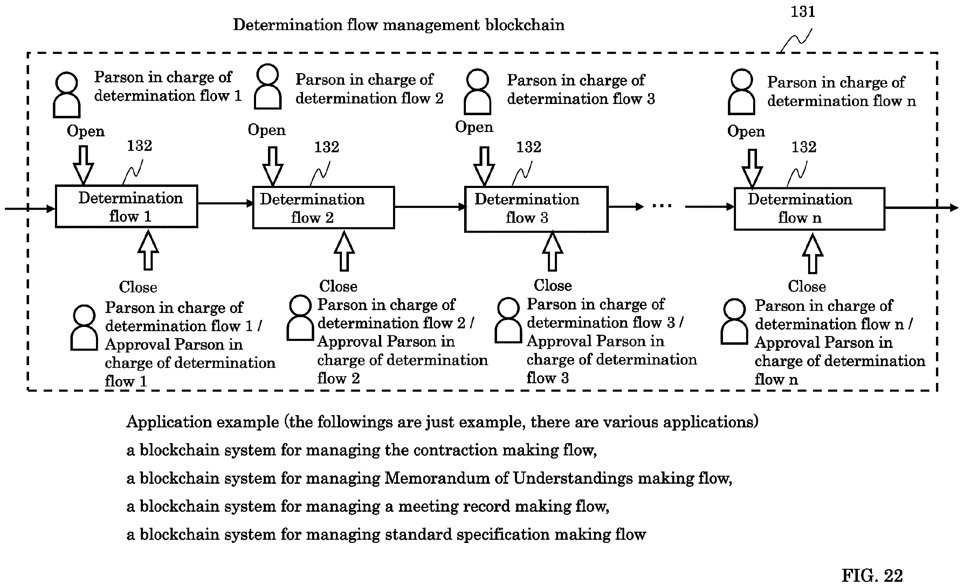

As shown in FIG. 22, a creation flow management blockchain 131 is generated in accordance with a flow of a determined flow in a blockchain data area 130 of each of the computer systems participating in the blockchain by the blockchain generation part 110. In the example of FIG. 22, a determination creation flow comprises N stages, block 132 are assigned from a determination flow 1 to a determination flow N and one determination creation flow management blockchain 131 is generated, and by a secret code setting function, an open secret code of a person in charge of each block and a close secret code of a person in charge and an approver are set. The determination flow processing assigned to each block 132 is executed, and data processing indicating the contents is inputted. The edited data and the hash value are sent between the blocks 132, and the decision flow processing proceeds.

There may be a variety of blockchain systems for flow management such as a blockchain system for managing the contraction making flow, a blockchain system for managing Memorandum of Understandings making flow, a blockchain system for managing a meeting record making flow, a blockchain system for managing standard specification making flow.

The eighth application is an example of application to a use right flow management system for managing flow such as setting and variation of use right to each usage object and is an example in which a pre-scheduled type of blockchain system 1 is applied. The computer system is a computer system that is used by an entity or organization involved in each use right flow, wherein the block corresponds to each stage of each use right flow.

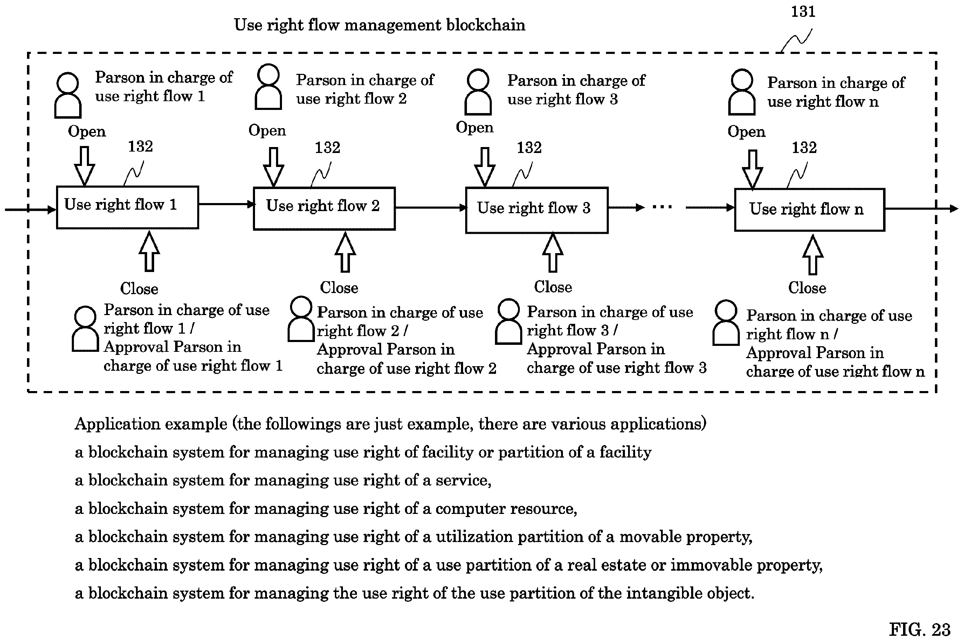

As shown in FIG. 23, a use right flow management blockchain 131 is generated in each blockchain data area 130 of a computer system participating in blockchain by the blockchain generation part 110 according to the flow of the use right flow. In the example of FIG. 23, a use right flow comprises N stages, block 132 are assigned from a use right flow 1 to a use right flow N, one use right flow management blockchain 131 is generated, and an open secret code of a person in charge, a close secret code of a person in charge and an approver are set for each block by a secret code setting function. Use right flow processing assigned to each block 132 is executed, and data processing indicating the contents is input. The edited data and the hash value are sent between the blocks 132, and the use right flow processing is advanced.

There may be a variety of blockchain systems for use right flow management such as a blockchain system for managing use right of a service, a blockchain system for managing use right of a computer resource, a blockchain system for managing use right of a utilization partition of a movable property, a blockchain system for managing use right of an use partition of a real estate or immovable property, and a blockchain system for managing the use right of the use partition of the intangible object.

The ninth application is an example of application to a blockchain 131 for managing an insurance claim processing flow and is an example in which a pre-scheduled blockchain system 1 is applied. The data to be processed is related to the insurance claim processing data, and the block 132 corresponds to each stage of the data exchange flow related to the insurance claim processing. The participating computer system 100 is a computer system in which an entity or organization involved in the flow of each insurance claim processing is utilized.

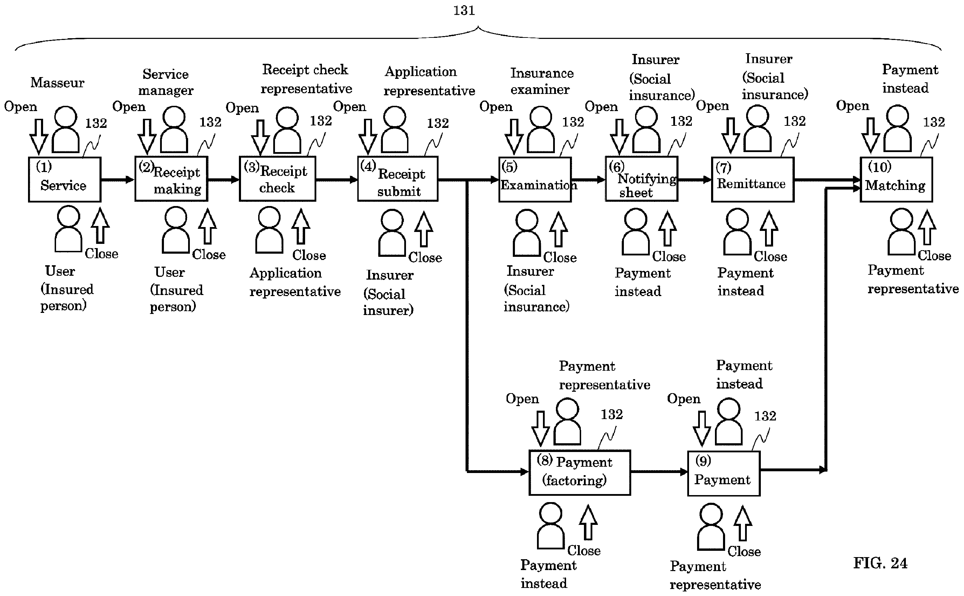

FIG. 24 is a drawing showing an example of application as a blockchain system 1 relating to insurance claim processing of the visit based medical massage.

In FIG. 24, a "blockchain 131" commonly constructed in a blockchain data storage area 130 in the blockchain system of the present invention and a "person in charge" of each block are taken out and shown easily in FIG. 24, and each computer system 100 is provided with a configuration of a computer system 100 shown in Embodiment 1 or Embodiment 2. Various secret codes necessary for each person in charge are given and set by a blockchain generation part 110 of the authority computer system 100A.

The authority computer system 100A may be used by any entity, but for example, a managing association of a franchise group for performing receipt check becomes the authority entity. Since the massage is performed by visiting a patient's home or the like and the flow to be insured is generally determined, the blockchain 131 of the insurance claim processing is preferably template.

An example of the blockchain 131 of FIG. 24 is provided with a feed-forward branch. In other words, after the fourth block 132, the blockchain 131 is branched into two, the fifth block, the sixth block and the seventh block are the main blockchain, and the flow of the eighth block and the ninth block for performing the replacement (factoring) processing of the nutritious cost is provided below it, and this is a feed-forward type branch. In the tenth block, the flow of the two blocks becomes one, and the erasure processing of the payment processing and the receipt of the medical expenses is performed by matching.

In the example of FIG. 24, a person in charge drawn above each block is given an editing open secret code and an edition close secret code or an approval close secret code to a person in charge drawn below each block. When receipt preparation or receipt examination processing assigned to each block is executed, data indicating the progress contents are inputted. The edited data and the hash value are sent between the blocks 132, and the processing related to the insurance request is advanced.

The tenth application is an example of application to a medical treatment flow management system for managing the flow of a medical treatment flow in a medical institution and is an example in which a pre-scheduled type of blockchain system 1 is applied. The data managed by the blockchain is related to medical treatment processing data for managing the medical treatment flow, and the block 132 corresponds to each stage of the flow of data exchange related to the medical treatment.

The computer system 100 participating in the blockchain system 1 of the present Embodiment is a computer system that is used by an entity or organization involved in each medical procedure.

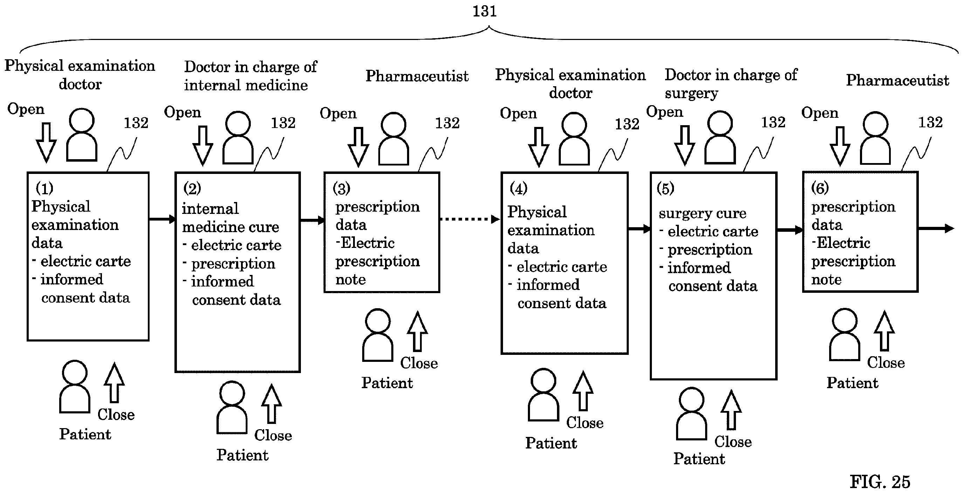

FIG. 25 is a drawing illustrating an example of application as a blockchain system for medical treatment.

In FIG. 25, a "blockchain 131" commonly constructed in a blockchain data storage area 130 in the blockchain system of the present invention and a "person in charge" of each block are taken out and shown easily in FIG. 25, and each computer system 100 is provided with a configuration of a computer system 100. Various secret codes necessary for each person in charge are given and set by a blockchain generation part 110 of the authority computer system 100A.

In the example of FIG. 25, the entity who performs the processing of each block 132 may be two or three.

The authority computer system 100A may be responsible for, for example, an example of a medical institution (Office). Since the patient visits a medical institution such as a hospital and receives medical treatment, and the flow to be insured is generally determined, the blockchain of the medical treatment is preferably template.

In the example of FIG. 25, a person in charge drawn above each block is given an editing open secret code and an editing close secret code or an approval close secret code to a person in charge drawn below each block. When receipt preparation or receipt examination processing assigned to each block is executed, data indicating the progress contents are inputted. Editing data and a hash value are sent between the blocks, and processing related to the medical treatment progresses.

### Embodiment 4

Next, an example of generating a "self-designated blockchain system" in which block 132 to be recorded for the same subject or the same object is connected is described as an application example of the blockchain system of the present invention.

A block 132 to be recorded for the same subject or the same object can be widely applied, but the generated information is recorded in each block. Thus, a blockchain for various history recording management can be formed. The data to be recorded are not particularly limited, and various ones such as a blockchain for traveling record management of a vehicle, a blockchain for inventory management of a warehouse, and a personal information blockchain for recording personal information can be formed.

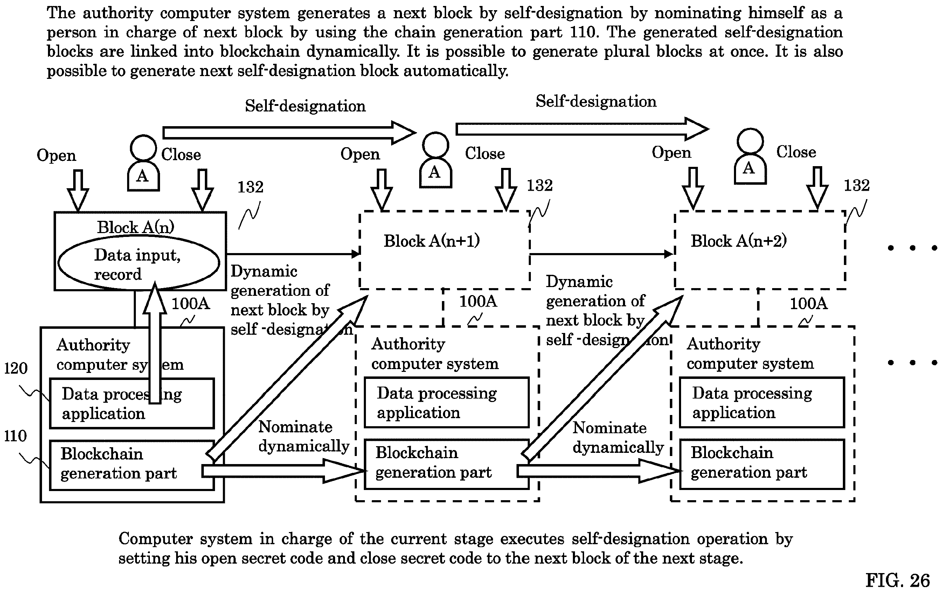

FIG. 26 is a drawing for easily showing a self-designated mechanism in which block 132 is connected to the same subject or the same object in a continuous manner. The base is described as being provided with the configuration of the "dynamic construction type blockchain system 1-2" shown in Embodiment 2. A block having the same subject as a person in charge is described as an example.

As shown in FIG. 26, data processing is executed by using a data processing application 120 for the block A(n) in which the user A using the computer system 100A is block 132 of the current stage. In this case, processing related to user A itself or business of user A is executed, and the editing data are recorded in the block A (N) by using a data processing application 120. The data processing is performed to store the data in the block A (N).

Here, the user A who uses the "dynamically constructed blockchain system 1-2" shown in Embodiment 2 dynamically generates the next block and sets an open secret code and a close secret code. By doing so, the person in charge of the next stage can be appointed, but this Embodiment 4, the user A himself is assigned to be the person in charge of the block A (n + 1) in the next stage. Self-designation (that is, set the open secret code and close secret code of user A), the content of the data processing of the next-stage block is also the same as that of the current block, that is, if the processing related to user A himself or the business of user A is executed, the data processing application 120 is used to perform the data processing and perform the designation to record and store edited data in block A (n+1). The generation of this next-stage block may be intentionally performed by the individual user A each time, or a plurality of stages of blocks may be set together, or by automatic setting in the blockchain generation part 110 when the current stage block may be generated. The next stage may be automatically generated as the block in charge of user A after the processing is completed. In this way, self-designation for the next block is repeated.

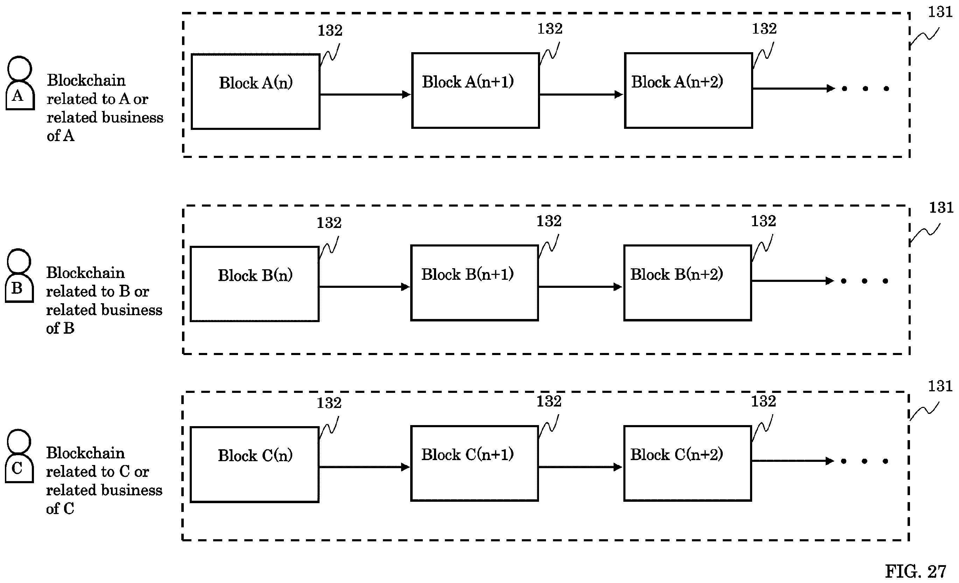

FIG. 27 is a simple illustration of a blockchain generated by the mechanism shown in FIG. 26. As shown in FIG. 27, processing data related to the user A himself or the business of A in each block (block A (n), block A (n+1), block A (n+2), ...), "Information blockchain 131 regarding user A individual or A's business" in which is recorded and stored is obtained. Similarly, "information blockchain 131 related to B individual or B's business", "information blockchain 131 related to C individual or C's business", and the like are also individually generated. When the open secret is entered, the edit data can be entered and recorded in each block. After the edit data is entered and recorded, when the close secret is entered, the recorded contents of the edit data are confirmed. The editing data and hash values are sent between blocks in any of the patterns of FIG. 4 to Fig. 9, and a blockchain is formed. This blockchain can also be said to be a blockchain for managing history records related to a certain person or a certain object.

If each open secret code and close secret code are biometric information code based on each person's biometric information, the personal information has high security and is difficult to tamper with, which is an advantage of blockchain technology.

The information recorded in the blockchain 131 may be subjected to encryption processing in whole or in part thereof or may be subjected to big data processing when provided to the outside.

Next, a specific application example of a "self-designated blockchain system" is described.

Various applications may be provided, for example, a travel recording blockchain system installed on a vehicle using a smart on-vehicle device.

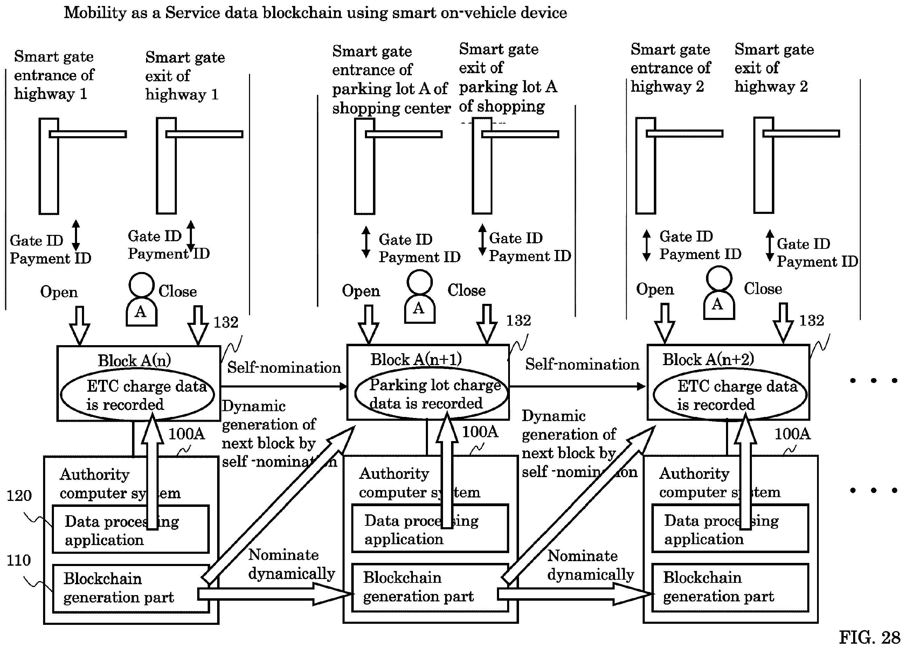

FIG. 28 is a drawing showing an example of application to a traveling recording blockchain system installing a vehicle using a smart on-vehicle device. In FIG. 28, it is possible to capture a traveling record showing various traveling conditions (travel route, travel distance, travel speed, gasoline consumption, cabin temperature setting, sensor information mounted on a vehicle, etc.) generated for vehicle travel without being limited to charging information.

Since both hands are blocked while driving the vehicle, it may be difficult to enter the open secret code and the close secret code during driving events. Therefore, the electric vehicle key used for unlocking the smart lock when getting on the vehicle is temporarily stored in the smart on-vehicle device, and the open secret code and the close secret code described in FIG. 26 are set for the open secret code and the close secret code of each block corresponding to the toll parking lot charging blockchain described in FIG. 28. These codes stored in the smart on-vehicle device are used when the gate ID information is input from the smart gate. It may have a function of automatically setting the electric vehicle key to the open function 122 and the close function 125.

First, when a user A uses a vehicle equipped with a smart on-vehicle device, the driving schedule comprises the use of a highway 1, the use of pay parking at the shopping center A, and the use of the highway 2.

There is ETC gate (smart gate) is installed in the entrance gate and the exit gate, and a wireless charging processing gate (smart gate) is also installed in the pay parking 1. A radio-type smart on-vehicle device (on-vehicle ETC device) is mounted on the vehicle, and communication such as gate ID information, vehicle ID information, charging information, and settlement ID information of the vehicle can be communicated between the smart gate and the smart on-vehicle device.

As shown in FIG. 28, the user A drives from the entrance gate of the highway 1 and passes through the entrance gate. Here, gate ID information, vehicle ID information, settlement ID information, etc. are exchanged between the smart gate of the entrance of the highway 1 and the smart on-vehicle device.

The acquired gate ID information is inputted to the current block A (n) by using a data editing function 123 of a data processing application 120.

Then, the vehicle of the user A passes through the exit gate of the highway 1. Here, gate ID information, charging information of the settlement account are exchanged between the smart gate of the highway 2 and the smart on-vehicle device.

The data editing function 123 of the data processing application 120 is used based on the exchanged information, and the edited data are recorded in a stage block A (n). A hash value is calculated by a hash value calculation function 124.

In this case, the next stage block is generated as shown in FIG. 26 by the trigger of any one of FIG. 4 and FIG9, but the user A of the block of the stage sets the user A itself (that is, the open secret code and the close secret code of the user A) so that the user A itself of the block A (n+1) of the next stage becomes the person in charge of the block A (n+1) of the next stage. The data processing application 120 records the edited data in the next stage block A (n+1) if the contents of the data processing of the next stage block are set as the same as that of the current block. That is, self-designation of the user A himself or the business of the user A is repeated, the edited data are recorded in the next stage block A (n+1) by the data processing application 120 repeatedly. The data processing is specified as storing. The setting of the next stage block A (n+1) may be performed intentionally by the user A, but it is possible to perform automatic setting processing.

When the next stage block A (n+1) is formed, the edited data and the hash value data of the stage A (n) are taken over to the next stage block A (n+1). It is also possible to take over only the hash value data and to operate without taking over the edited data. That is, the charging information of the highway 1 is stored in the stage block A (n) and the data generated by the data processing of the next stage is stored in the next stage block A (n+1).

Next, the user A passes the entrance gate of the pay parking 1 of the shopping center A to park the vehicle. Here, gate ID information, vehicle ID information, settlement ID information, etc. are acquired between the smart gate of the entrance of the pay parking 1 and the smart on-vehicle device. The obtained gate ID information is inputted to the next stage block A (n+1) by the data editing function 123 of the data processing application 120.

The vehicle of the user A passes through the exit gate of the pay parking 1 in the shopping center A by finishing the use. Here, gate ID information, charging information to the settlement account are exchanged between the smart gate of the exit of the pay parking 1 and the smart on-vehicle device.

The data editing function 123 of the data processing application 120 proceeds necessary operation based on the exchanged information, and the edited data are recorded in a next stage block A (n+1). A hash value is calculated by a hash value calculation function 124.

From FIG. 4 to FIG. 9, a step block A (n+2) is generated in a self-designated form as shown in FIG. 26.

In this way, in a travel history in which the user A travels using a vehicle equipped with a smart on-vehicle device, charging records to be performed in the form of passing through the smart gate are successively executed and connected to each other and recorded in the blockchain.

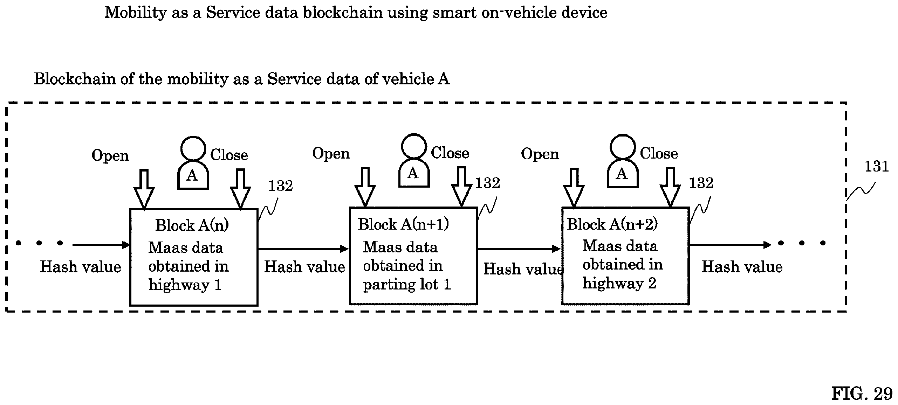

FIG. 29 shows an example of the traveling recording blockchain of the traveling vehicle A in a simple manner. Thus, the traveling recording blockchain of the traveling vehicle A is recorded as a blockchain. The traveling state (travel route, travel distance, travel speed, gasoline consumption, vehicle temperature setting, sensor information mounted on the vehicle, etc.) can also be recorded.

Next, an example of an inventory management blockchain system for a smart logistics for warehouse inventory management is described.

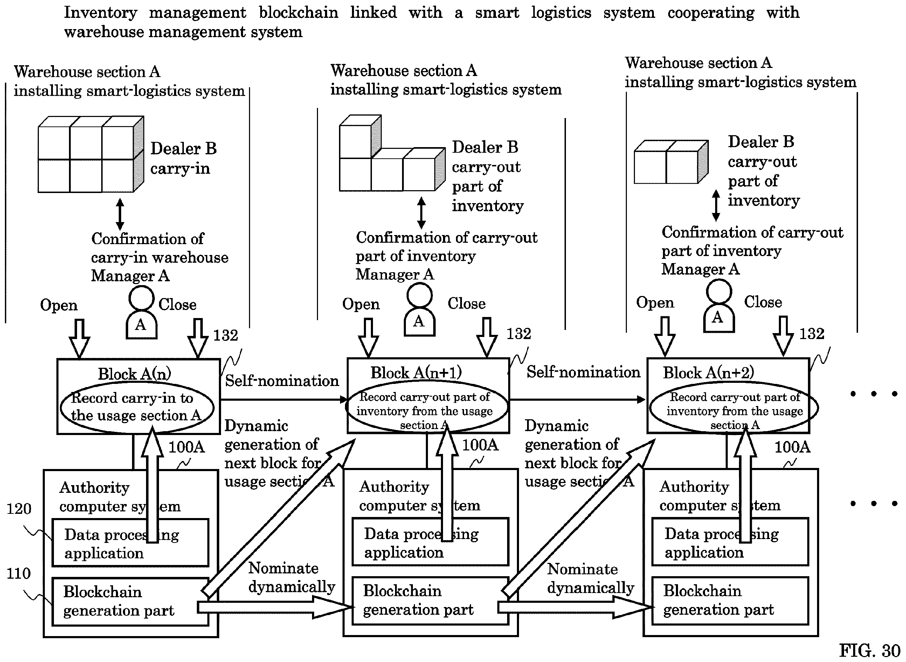

FIG. 30 is a drawing showing an example of an application of an inventory management blockchain linked with a smart logistics system.

The smart logistics system is often based on a warehouse in which a warehouse management system is operated. The present invention can be applied even if the current stock management is carried out on a paper base by manual work, the warehouse management system is operated.

For example, there is a usage section A, and a dealer B who has contracted the usage section A carries out warehousing and delivery of the commodity, and the warehouse manager A manages the usage section A. The inventory history such as warehousing and delivery of merchandise to the usage section A is managed. Although FIG. 30 shows the stock information about the entrance and exit, inventory management information indicating other information (warehouse temperature setting information, warehouse temperature variation information, etc.) can also be recorded as the inventory information.

As shown in FIG. 30, at a certain date and time, the dealer B carries the merchandise into the usage section A and stores them. The warehouse manager A confirms the carry-in worker of the trader B, inputs the open secret code to the usage section A, and makes the use of the usage section A possible, and performs the carry-in work (if the warehouse is a warehouse with a key).

When the carry-in work by the carry-in worker of the trader B is completed, the warehouse manager A confirms the commodity entry/exit (date, commodity, warehousing number, state), the carry-in worker and the commodity entry/exit information, the carry-in worker identification information, etc. via the data processing application 120 (if it is a warehouse with a key).

A data editing function 123 of the data processing application 120 is used for the stage block A (n) and the inputted information is inputted and recorded.

The data editing function 123 of the data processing application 120 is used based on the input information, and the edited data are recorded in the stage block A (n). A hash value is calculated by the hash value calculation function 124.

In this case, the next-stage block is generated as shown in FIG. 26 by the trigger of any one of FIG. 4 and FIG. 9, but the warehouse manager A itself of the block of the abutting stage sets the warehouse manager A itself (the open secret code and the close secret code of the warehouse manager A) so that the person in charge of the block A (n+1) of the next stage becomes the same person in charge of the block A (n) of the current stage. The data processing application 120 is used to record the edited data in the next stage block A (n+1). The data processing is specified as data processing to be stored. The setting of the next stage block A (n+1) may be performed intentionally by the warehouse manager A, but it is possible to perform automatic setting processing with the same content since the contents of the stage block are made to follow.

When the next stage block A (n+1) is generated, the editing data and the hash value data of the stage A (n) are taken over to the next stage block A (n+1). It is also possible to take over only the hash value data and to operate without taking over the editing data.

At a date and time at a later date, the person B carries out a part of the commodity from the usage section A and delivers it. The warehouse manager A confirms the carry-in worker of the trader B, inputs an open secret code to the usage section A, and performs carry-out work by enabling the use of the usage section A (if it is a warehouse with a key).

When the carry-out work by the carry-out worker of the trader B is completed, the warehouse manager A confirms the commodity entry/exit (date, commodity, delivery number, state), the carry-in worker and the commodity entry/exit information, the carry-in worker identification information, etc. through the data processing application 120.

The inputted information is inputted to a next stage block A (n+1) by using the data editing function 123 of the data processing application 120.

Editing data edited by the data editing function 123 based on the input information is recorded in a next stage block A (n+1). The hash value is calculated by a hash value calculation function 124.

Similarly, from FIG. 4 to FIG. 9, a step block A (n+2) is generated in the self-designated style as shown in FIG. 26.

In this way in the usage history of entering and delivering of the warehouse, the blocks are dynamically generated and connected in a form of the smart logistics system and recorded in an inventory management blockchain.

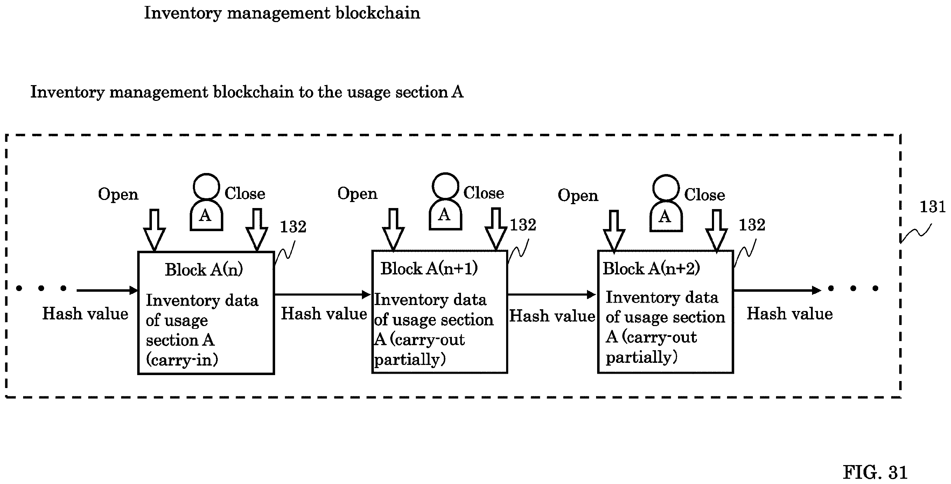

FIG. 31 shows an example of the inventory management blockchain of the usage section A in a simple manner. In this way the inventory management information of the usage section A is recorded as a blockchain. The stock information (contractor name, stock content of the contract, the warehousing date of the usage section A, the number of warehousing, the delivery date of the usage section A, the delivery number, the warehouse temperature setting information, the warehouse temperature variation information, etc.) can also be recorded together.

Next, an example of an information recording blockchain system for managing record information such as personal information and enterprise information is described.

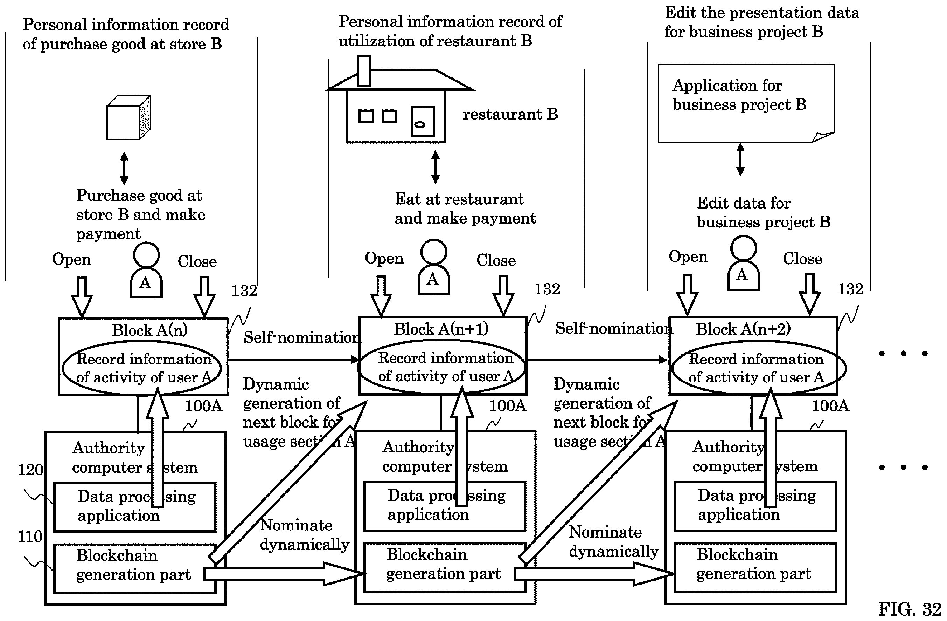

FIG. 32 is a drawing showing an example of an application of an information recording blockchain for recording information generated by various activities of a user and utilization of a usage object.

When an individual performs various activities such as life, consumption, movement, etc. information is generated. Similarly, any information is generated when an enterprise performs various activities such as merchandise production, commodity sales, service provision, etc.

The information can be obtained as digital information by digitizing even analog information at the time of occurrence of digital information, voice, appearance, etc. which can be recorded. Thus, the information generated in this way is collectively recorded in an appropriate unit such as each individual and each enterprise, and it is determined that the information is utilized by being recorded as big data. An organization body called an "information bank" appears as a player for utilizing the personal information, enterprise information and big data. The system for collecting and utilizing the information is called an "information bank system".

In this case, it is important that the information to be handled is information which is associated with the subject and is utilized under the approval of the entity. In the case of big data, it is important to obtain approval of the entity. It is important that the information is sufficiently guaranteed that the information is information on which various activities are accurately recorded and is not falsified information.

The present invention is applicable to recording information generated by various activities such as an individual and a company.

For example, information about a consumption activity of the user A (utilization of service or purchase of an article) is generated for a certain user A. The information collecting means is not used, but is collected from a settlement system, for example, by a cash-less settlement via a smartphone. Settlement information indicating these consumption activities can also be recorded.

As shown in FIG. 32, there is various activities (for example, consumption activities) of the user A at a certain date and time, and for example, the user A purchases the commodity by cash-less settlement. The cache-less settlement application is started by the input of the open secret code through the open function 122 of the data processing application for starting the cache-less settlement. In this case, the corresponding preceding block 132 (for example, the block specified as the next stage block of the previous last block in which the information has already recorded in the past) in the blockchain 131 in the blockchain data area 130 may be opened and unlocked together. In addition, the open secret code is inputted to the current block 132 separately from the start of the application for the cashless settlement, and the current block 132 is unlocked to access the internal data.

When the current block is not designated yet, the blockchain generating section 110 may dynamically create a current block when receiving the input of the open secret code.

The settlement processing is performed through an application for cashless settlement. When performing settlement, a user inputs the closed secret code for confirmation of contents and approval of money amount and executes cashless settlement. The data editing function 123 of the data processing application 120 is used for the stage block A (n) to input the information generated by the inputted cache-less settlement. The recording is performed. The editing data are recorded in a stage block A (n). A hash value is calculated by the hash value calculation function 124.

A cache-less settlement is executed. The block 132 may also be closed by the close secret code inputted at the time of settlement. It is also possible to apply the close secret code to the block 132 separately from the end of the application for cashless settlement and to close the block 132.

In this case, the next stage block is generated as shown in FIG. 26 by the trigger of any one of FIG. 4 and FIG. 9, the user A of the block of the current stage sets the user A himself /herself as the person in charge of next block in the next stage (that is, the open secret code and the close secret code of the user A is set) so that the user A of the block A (n) of the current stage becomes the person in charge of the block A (n+1) of the next stage. The data processing application 120 is used to record the edited data in the next stage block A (n+1). The data processing is specified as data processing to be stored. The setting of the next stage block A (n+1) may be performed intentionally by the user A, but it is possible to perform automatic setting processing with the same content since the contents of the stage block are made to follow.

When the next stage block A (n+1) is generated, the editing data and the hash value data of the stage A (n) are taken over to the next stage block A (n+1). It is also possible to take over only the hash value data and to operate without taking over the editing data.

At a date and time at a later date, the user A uses some service (ex. a meal at a restaurant). The user A inputs an open secret code to start the application for cashless settlement by inputting an open secret code in order to use the cashless settlement at the time of payment. In this case, the corresponding next stage block A (n+1) of the blockchain 131 generated in the blockchain data area 130 may be opened. It is also possible to perform an operation in which the open secret code is inputted to the next stage block A (n+1) separately from the start of the application for the cashless settlement to be unlocked and the internal data can be accessed.

The cashless settlement processing is performed. When performing settlement, the user A inputs the close secret code for confirmation of contents and approval of money amount and executes cashless settlement. Then, the application for cashless settlement is finished.

The inputted information inputted to a next stage block A (n+1) by using the data editing function 123 of the data processing application 120. The editing data edited by the data editing function 123 based on the inputted information is recorded in the next stage block A (n+1). A hash value is calculated by the hash value calculation function 124.

Similarly, from FIG. 4 to FIG. 9, the block A (n+2) is generated in a self-designated style as shown in FIG. 26.

Thus, the information of the use history generated by various activities such as an individual and an enterprise is recorded in each block, and the blocks are dynamically linked and generated and recorded in the information recording blockchain.

When the user A uses the presentation material creation application toward the business project B, a work for editing the presentation material is performed. The user A inputs the open secret code to the presentation material creation application. In this case, the corresponding successive stage blocks A (n+2) of the blockchain 131 generated in the blockchain data area 130 may be opened. In addition, the start of the presentation material application may be separate from the start of the presentation material application, and the open secret code is inputted to the step block A (n+2) one after another to be opened to make it possible to access the internal data.

The presentation material data is edited. The user confirms the content, inputs the close secret code, confirms the data editing content, and terminates the presentation material preparation application.

The data editing function 123 of the data processing application 120 is used for the successive stage block A (n+2). The editing data edited by the data editing function 123 based on the input information are recorded in successive stages A (n+2). A hash value is calculated by the hash value calculation function 124.

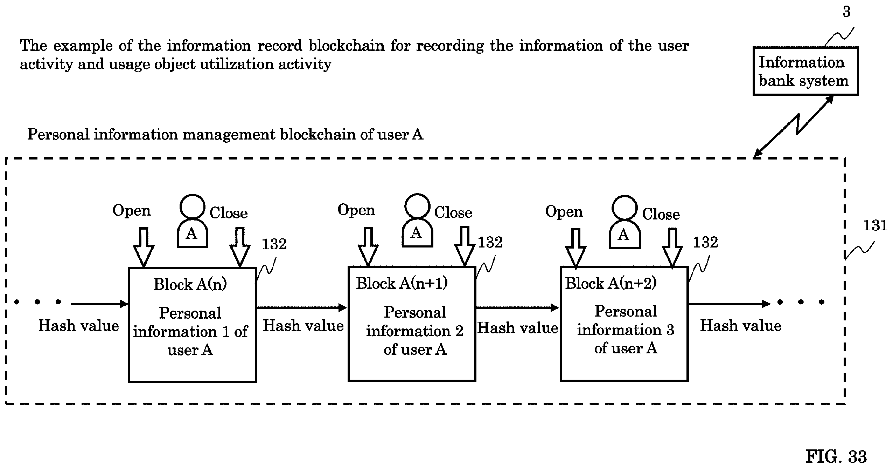

FIG. 33 shows an example of the information recording blockchain of the user A in a simple manner. Thus, information generated by various activities related to the user A is recorded in the blockchain.

Thus, it is to be understood that the information recording blockchain can be widely applied as long as the block 132 to be recorded for the same person and the same object are continued, and the information to be recorded is not particularly limited, and an information recording blockchain for recording and managing various histories can be formed.

In the blockchain technology, since a block is connected by a hash value between blocks, tampering or the like is difficult, and the system is high in security.

Further, FIG. 33 also shows a state in cooperation with the information bank system 3 of the information bank in order to effectively utilize the recording information of the obtained information recording blockchain 131.

In the blockchain system, when the personal information and enterprise information recorded in the information recording blockchain 131 are provided to the information bank, it is possible to specify the information to be selectively provided by finely setting whether the individual or the company which is the information provider can be effectively utilized. Further, in the blockchain system of the present invention, since encryption processing can be performed for each part of data, the user can select a part which does not want to use in the information bank, these part can hide by encryption.

The example of the information recording blockchain shown above is an example of information recording of cashless settlement data. However, the information to be recorded in the information recording blockchain is not limited. The information to be recorded is not particularly limited and may be various. For example, individual life information, individual health information, stock transaction information, bank account entry/withdrawal information, operation information in a factory of the company, operation information of a railroad company, and an airplane company can be varied.

### Embodiment 5

As Embodiment 5, an example of a data transaction system 2 using the editing data collected by the blockchain system 1 of the present invention will be described. In other words, the data transaction system uses the editing data accumulated by the various blockchain systems to which the present invention is applied as big data.

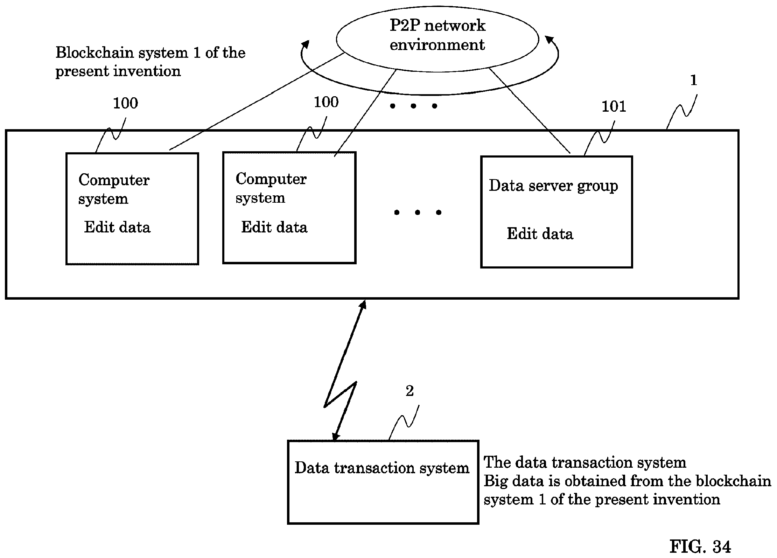

FIG. 34 is a drawing for easily showing the configuration of the data transaction system 2 of the present invention.

Editing data is collected by using the blockchain system 1 of the present invention. As a computer system participating in the blockchain system 1 of the present invention, for example, a distributed data server group 101 is included. A data server group 101 includes the configuration of a computer system 100 shown in Embodiment 1 or Embodiment 2. Editing data exchanged between the blockchains 131 is collected and accumulated along the data processing flow to the blockchain generated in the blockchain data storage area 130.

That is, the data server group 101 utilizes various data by providing the collected data collected and accumulated as big data.

The data utilized as big data is not particularly limited. For example, procedure data, process control data, specification data of parts related to manufacturing, manufacturing design data, manufacturing equipment operation data, quality test data, the parts and finished products. Traceability data, inventory management data, sales data, customer data, customer complaint data, product liability data, recall data, customer needs data, business process management data, goods distribution process management data, service provision process management data, software data, content data, food processing recipe data, itinerary management data, work management data, agricultural work process management data, fishery process management data, forestry process management data, dairy work process management data, project management data, sales management data, decision-making management data, usage right management data, insurance claim data, medical treatment data, medical history data, clinical trial data, billing data, and personal information data, part of these, all of these, or a combination of these are possible.

It can be provided as big data according to a request from a client requesting the big data.

While the preferred embodiment of the configuration of the present invention has been shown and described, it will be understood that various changes may be made without departing from the scope of the invention. Description of the reference numerals

1 blockchain system
2 data transaction system
3 bank system of the information bank
100 computer system
101 distributed log data server group
110 blockchain generation part
120 data processing application
121 data processing flow control function
122 open function
123 data editing function
124 hash value calculation function
125 close function
130 blockchain data area
131 blockchain
132 block
140 reference memory area

## Claims

1. A blockchain system provided with a plurality of computer systems connected to each other so as to be capable of transmitting and receiving data in a network, comprising:
a data processing application installed in each of the computer system;
a blockchain generation part for generating the blockchain on a common area of a blockchain data area on each computer system or a blockchain data area on a cloud in advance, wherein the data processing stage is blocked and the blockchain representing the flow of the data processing by the chain of the blocks is systematically or dynamically configurated into the blockchain data area on each computer system or on the cloud;
a data processing part in which a commonly configurated blockchain generation part and each of the data processing applications execute predetermined data processing in each block in a scheduled or dynamically manner along the flow of the blockchain;
wherein each of the blocks, the data itself, the blockchain data area, the data processing application, or a memory storage area referred to by the data processing application have an open secret code for accessing the corresponding data in the blockchain and a closed secret code for closing the data processing application normally,
wherein the blockchain system includes: an opening function for opening the corresponding block, the data file in the block, the blockchain data area, or the data processing application when receiving and matching the inputted open secret code; a data editing function for editing the data; and a closing function for closing the corresponding block, the data file in the block, the blockchain data area, or the data processing application when receiving and matching the inputted close secret code.

2. A blockchain system according to claim 1,
wherein the data exchanged between the blockchains includes the edited data and hash value,
wherein the data editing function executes the data processing of the data processing stage of a current stage in which the editing data taken over from the preceding block, and includes a hash value calculating function for calculating current hash value on the basis of the hash value data taken over from the preceding block in the preceding stage and the edition data obtained by the current block,
and the closing function includes a data notifying function for notifying the edited data and the hash value obtained in the current block to other data processing application participating in the blockchain.

3. A blockchain system according to claim 2,
the data processing application of each computer system provided with a data storage function storing the notified data in the corresponding block to be stored when the edited data and the hash value by the data notifying function.

4. A blockchain system according to any one of claims 1 to 3, wherein the authority computer system for managing the blockchain system is predetermined among a plurality of computer systems,
the authority computer system includes the blockchain generation part, and the authority computer system generates a blockchain representing the flow of the data processing and the content of data processing to be executed in the data processing step of each of the blocks by the blockchain generation part and notifies to each of the computer systems participating in the blockchain system in which the blockchain has been pre-configured in common.

5. A blockchain system according to claim 4, wherein the authority computer system is provided with a secret code setting function for setting each of the open secret code and the close secret code to each block or each data file in each block.

6. A blockchain system according to any one of claims 1 to 3, wherein some of computer systems or every computer system includes the blockchain generation part,
the computer systems in charge of current stage can generate dynamically a next block following to the current stage and the content of data processing to be executed in the data processing step of the next block by the blockchain generation.

7. A blockchain system according to claim 6, wherein the computer system generating dynamically the next block is provided with a secret code setting function for setting the open secret code and the close secret code to the generating next block or each data file in the generating next block.

8. A blockchain system according to claim 5 or 7,
each of the open secret codes and each of the close secret codes set by the secret code setting function can be a disposable secret code which can be used only once.

9. A blockchain system according to claim 5 or 7,
each of the open secret codes and each of the close secret codes set by the secret code setting function can be biometric information code information based on biological information of a person responsible for the operation of each of the blocks.

10. A blockchain system according to any one of claims 1 to 9,
wherein there are two kinds of the open secret code, the one is an open secret code for allowing only viewing of the data in the block of the blockchain without activating the data editing function of the data processing application, and the other is an open secret code for activating the data editing function of the data processing application and editing the data in the block of the blockchain,
wherein there are two kinds of the close secret code, the one is a close secret code for closing the opened state block of the blockchain by normally ending each block or the data in each block, and the other is a close secret code which reflects editing by the data editing function of the data processing application and closes each block or the data in each block normally,
the open secret code and the close secret code for allowing viewing are commonly applied to all or a plurality of blocks or the data in the block, all of the computer systems are notified,
and the open secret code and the close secret code for allowing editing are individually given to the computer system in charge of the block or the data in the block.

11. A blockchain system according to any one of claims 1 to 9,
wherein there are two kinds of the open secret code, the one is an open secret code for allowing only viewing of the data in the block of the blockchain without activating the data editing function of the data processing application, and the other is an open secret code for activating the data editing function of the data processing application and editing the data in the block of the blockchain,
wherein there are three kinds of the close secret code, the one is a close secret code for closing the opened state block of the blockchain by normally ending each block or the data in each block, and the second is a close secret code which reflects editing by the data editing function of the data processing application and closes each block or the data in each block normally, and the third is a close secret code for allowing approving the data edition.
the open secret code and the close secret code for allowing viewing are commonly applied to all or a plurality of blocks or the data in the block, all of the computer systems are notified,
the open secret code and the close secret code for allowing editing are individually given to the computer system in charge of the block or the data in the block,
and the close secret code for allowing approving the data edition is individually given to the computer system in charge of the block or the data in the block,

12. A blockchain system according to claim 10 or 11,
wherein the data processing application includes a function of downloading all or a part of the data in the preceding block of the blockchain data area in the preceding stage when the open secret code is input, or a function of uploading all or a part of the data in the current block to the next block of the blockchain data area in the next stage when the close secret code is input.

13. A blockchain system according to any one of claims 1 to 12,
wherein the close function of the data processing application includes an encryption processing function for encrypting all or a part of the data in the block, and the open function of the data processing application includes a decryption processing function for decrypting all or a part of the data,
the data processing application decrypts the encrypted data in operable state by the decryption processing function in response to the input of the open code,
the data processing application encrypts the edit data in inoperable state by the encryption processing function in response to the input of the close code.

14. A blockchain system according to any one of claims 1 to 13, wherein the blockchain is formed in a chain in which each of the blocks is arranged in one dimension.

15. A blockchain system according to any one of claims 1 to 13, wherein the blockchain is formed in which each of the block is arranged in one dimension as a main blockchain, in addition, a secondary blockchain or higher-order blockchains of one or more blocks branched from one or a plurality of blocks included in the main blockchain are formed onto the main blockchain, and the blockchain is composed in two-dimension or higher-dimension.

16. A blockchain system according to claim 15, wherein the data processing application includes a sequence control function for controlling the transition sequence of the block of the main blockchain and the transition sequence of the block of the secondary blockchain or higher dimensional blockchain,
as a condition for starting the data editing function of the block, in addition to the input of the open secret code set in the open function, the processing of the block in the main blockchain and the secondary blockchain or higher dimensional blockchain is completed in the main blockchain in which the processing is required to be completed prior to the start of the data processing related to the following block of the stage described in the sequence control function.

17. A blockchain system according to any one of claims 1 to 16, the blockchain system is applied to a procedure management wherein, the data managed and processed in the blockchain is related to procedure management data for managing a procedure flow in which each procedure is connected, and the computer system is a computer system in which an entity or organization involved in each procedure is used, and each block corresponds to each stage of each procedure.

18. A blockchain system according to any one of claims 1 to 16, the blockchain system is applied to a process management wherein, the data managed and processed in the blockchain is related to process management data for managing a process flow in which each process is connected, and the computer system is a computer system in which an entity or organization involved in each process is used, and each block corresponds to each stage of each process.

19. A blockchain system according to claim 18, the blockchain system for process management is a blockchain system for managing design process, a blockchain system for managing producing process, a blockchain system for managing processing process, a blockchain system for managing composing process, a blockchain system for managing test process, a blockchain system for managing inventory quality, or a combination thereof.

20. A blockchain system according to claim 18, the blockchain system for process management is a blockchain system for managing business flow, a blockchain system for managing the flow of products, a blockchain system for managing the flow of a service, a blockchain system for managing the flow of a software development, a blockchain system for managing the flow of contents development, a blockchain system for managing the food processing flow, a blockchain system for managing the itinerary schedule flow or a combination thereof.

21. A blockchain system according to any one of claims 1 to 16, the data managed and processed in the blockchain system is related to work management data for managing a work flow in which each work is connected, and the computer system is a computer system in which an entity or organization involved in each process is used, and each block corresponds to each stage of each work.

22. A blockchain system according to claim 21, the blockchain system for process management is a blockchain system for managing for agricultural work flow management, a blockchain system for fishery work flow management, a blockchain system for forest work flow management, a blockchain system for management of dairy work flow, or a combination thereof.

23. A blockchain system according to any one of claims 1 to 16, the data managed and processed in the blockchain system is related to project progress management data for managing a project progress flow in which the progress of the project is connected, and the computer system is a computer system in which an entity or organization involved in each project process is used, and each block corresponds to each stage of each project process work.

24. A blockchain system according to claim 23, the blockchain system for buying and selling progress management, the data managed by the blockchain is related to the sales progress management data for managing the buying and selling progress flow in which the flow of the progress of the buying and selling is connected, and the computer system is a computer system utilizing the entity or the organization participating in the flow of the buying and selling progress, and the block is a blockchain system for dealing progress management corresponding to each stage of the flow of the buying and selling progress.

25. A blockchain system according to any one of claims 1 to 16, the data managed and processed in the blockchain system is related to determination progress flow including a contract progress flow, a memorandum of understanding progress flow, a meeting progress flow, and the computer system is a computer system utilizing the entity or the organization participating in the flow, and each block corresponds to each stage of each determination progress flow.

26. A blockchain system according to any one of claims 1 to 16, the data managed and processed in the blockchain is usage right management data for managing usage rights in which progress flows related to the application or share of a facility, a service, a computer system, a movable property, a real estate, an immovable property, or an usage partition thereof, wherein the computer system is a computer system that uses an entity or organization involved in the flow of each usage right, and the block is a blockchain system for usage right management corresponding to each stage of the flow of the usage right.

27. A blockchain system according to any one of claims 1 to 16, the data managed and processed in the blockchain is related to the insurance application data for managing an insurance application flow, wherein the computer system is a computer system that uses an entity or organization involved in the flow of each insurance application, and the block is a block corresponding to each stage of the flow of the insurance application flow.

28. A blockchain system according to any one of claims 1 to 16, the data is related to the medical cure data for managing a medical cure flow, wherein the computer system is a computer system that uses an entity or organization involved in the flow of each medical cure flow, and the block is a block corresponding to each stage of the flow of the medical cure flow.

29. A blockchain system according to any one of claims 1 to 16, the data is related to the clinical case data for managing a clinical case flow, wherein the computer system is a computer system that uses an entity or organization involved in the flow of each clinical case flow, and the block is a block corresponding to each stage of the flow of the clinical case flow.

30. A blockchain system according to any one of claims 1 to 29, wherein the data processing application includes the data processing application is provided with a charging processing function, and the determination and settlement of the charging content are executed in conjunction with the progress of the processing of each block of the blockchain.

31. A blockchain system according to any one of claims 1 to 3, the blockchain system is applied as a blockchain system for recording and holding personal information,
wherein the blockchain generation part and the secret code setting function are provided, through the blockchain generation part, the next block of the next stage in charge of the user is dynamically generated or automatically prepared, and the open secret code and the close secret code related to the next stage are set or automatically set by itself to the block of the next stage through the secret code setting function,
the block involved by himself / herself are generated continuously.

32. A blockchain system according to claim 31, the content of data processing to be executed in the data processing stage of each block is a record of personal information associated with the user, and the blockchain is formed as a personal information blockchain in which the personal information of the user is accumulated.

33. A blockchain system according to any one of claims 5, 7 31 and 32, wherein the open secret code and the close secret code are biological information code based on user's own biological information.

34. A data transaction system in which applying and operating of the blockchain system according to any one of claims 1 to 33,
at least one distributed log data server is included in the distributed log data server group, the data server group is provided with a client which is exchanged between the blockchains along the flow of the data processing, collects and stores the edited data in the data server group, such as procedure data, process management data, specification data of members related to the data, production facility operation data, quality test data, traceability data of the member and the finished product, itinerary data, sales data, customer data, claim data from customer, product liability data, recall management data, work flow management data, business flow management data, article distribution process management data, service providing process management data, software data, content data, food processing recipe data, travel management data, work management data, farm work process management data, usage right management data, insurance claim data, medical treatment data, medical history data, clinical trial data, charging data and personal information data, a part, all or a combination thereof.
